# EUROPEAN PATENT SPECIFICATION

(11) **EP 1 174 739 B1**
(45) Date of publication and mention of the grant of the patent: **30.08.2006**
(21) Application number: 01306215.3
(22) Date of filing: 19.07.2001
(51) Int. Cl.: G02B 5/30, G02B 5/02

(54) **Anisotropic scattering film and liquid crystal display**
Anisotrope Streuungsfolie und Flüssigkristallanzeigevorrichtung
Film à diffusion anisotropique et dispositif d'affichage à cristaux liquides

(30) Priority: 21.07.2000 JP 2000220514; 19.09.2000 JP 2000283114
(43) Date of publication of application: 23.01.2002
(73) Proprietor: Sumitomo Chemical Company, Limited, Tokyo 104-8260 (JP)
(72) Inventor: Yamamoto, Kyoko, Tsukuba-shi, Ibaraki (JP); Kuwabara, Masato, Tsukuba-shi, Ibaraki (JP); Maeda, Yasuteru, Kitasoma-gun, Ibaraki (JP); Fujisawa, Koichi, Tsukuba-shi, Ibaraki (JP)
(74) Representative: Cresswell, Thomas Anthony

(56) References cited:
- EP-A- 0 709 444
- EP-A- 0 843 197
- EP-A- 0 859 246
- US-A- 5 825 543
- US-A- 5 940 211
- US-A- 5 995 183

## Description

### BACKGROUND OF THE INVENTION

### Field of the Invention

The present invention relates to an anisotropic scattering film and a liquid crystal display using the anisotropic scattering film.

### Description of the Related Art

In conventional liquid crystal panels, brightness thereof has been reduced to half or less of the original brightness of a back light since an absorption type polarizing plate is used. In use, due to two polarizing plates on the front side and back side of a liquid crystal panel, light utilization efficiency becomes lower, and the brightness thereof is reduced to 30% to 40% of the original brightness of a back light. Therefore, there are trials of converting polarization to compensate these defects, for enhancing light utilization efficiency.

For example, JP-A No.11-509014 discloses a polarized element wherein anisotropic particles having a specific size are arranged in an isotropic material at a specific interval. However, the polarized element has problems that satisfactory scattering strength is not obtained, and controlling the dispersibility of particles is difficult.

JP-A9-297204 discloses an anisotropic scattering element where scattering particles whose aspect ratio is 1 or more, are dispersed with arranging to one direction, in a supporting medium having a refractive index different from the scattering particles. However, the anisotropic scattering element has also problems that satisfactory scattering strength is not obtained, and controlling the dispersibility of anisotropic scattering particles is difficult. Other known scattering films are disclosed in EP 0859246A, US-A-5995183, US-A-5825543,US-A-5940211.

### SUMMARY OF THE INVENTION

An object of the present invention is to provide an anisotropic scattering film which has high transmittance and excellent scattering property, and a liquid crystal display having high luminance obtained by using the above-mentioned anisotropic scattering film.

The present inventors have intensively studied for solving the above-mentioned problems, and resultantly found that an anisotropic scattering film comprising a micro-porous film and a substance having a refractive index different from the refractive index of the micro-porous film in micro pores of said micro-porous film, has a high transmittance and excellent scattering property and that luminance of a liquid crystal display can be enhanced using this film, leading to completion of the present invention. The anisotropic scattering film of the present invention can be produced easily as well.

First , the present invention relates to an anisotropic scattering film comprising a micro-porous film and a substance in micro pores of said micro-porous film, wherein the void fraction occupied by micro pores in the micro-porous film is from 30 to 85%, the micro pores observed on the surface of the film are substantially in the form of an ellipse, the ratio of the major axis to the minor axis (major axis/minor axis) of said ellipse is greater than 1, the minor axes of the micro pores are smaller than the wavelength of light, the major axes of the micro pores are oriented in substantially one direction, the refractive index of the substance in micro pores of the micro-porous film differs from the refractive index of the micro-porous film, the anisotropic scattering film has scattering anisotropy to a polarization component of polarized light, and the micro pores are substantially connected mutually through curved paths from the surface to the other surface of the film.

Second, the present invention relates to a liquid crystal display comprising a liquid crystal panel with a front surface side and a back surface side, a polarizing plate at least on the front surface side of the liquid crystal panel, and an anisotropic scattering film as described above, a light guide, and a reflection plate or a diffuse reflection plate piled in this order on the back surface side of the liquid crystal panel, wherein the transmission axis of the liquid crystal panel and the transmission axis of the anisotropic scattering film are approximately parallel.

### BRIEF DESCRIPTION OF THE DRAWINGS

Fig. 1 is a view showing the surface of a micro-porous film.
Fig. 2 is a view showing the form and the major axis and minor axis directions of a micro pore.
Fig. 3 is a view showing constitution of a liquid crystal display.
Fig. 4 is a view showing constitution of a liquid crystal display.
Fig. 5 is a view showing mechanism of a liquid crystal display.

The denotations used in the figures are as follows.
1: Anisotropic scattering film
2: Micro pore in film surface
3: Minor axis size in film surface of micro pore
4: Major axis size in film surface of micro pore
5: Orientation of major axis
6: Polarizing plate
7: Liquid crystal cell
8: Back light
9: Reflection plate or diffuse reflection plate
10: Retardation plate
11: Polarized light having a plane of vibration vertical to paper surface
12: polarized light having a plane of vibration parallel to paper surface

### DETAILED DESCRIPTION OF THE INVENTION

The anisotropic scattering film referred to in the present invention is a film having scattering anisotropy to a polarizing component of the polarized light.

The micro-porous film means a porous or sponge-like film. Namely, in the film, the micro pores are substantially connected mutually. The micro-porous film is a film having so-called "penetrating pores" in which micro pores are substantially connected mutually through curved paths from the surface to the other surface of the film.

Gas permeability is an index showing the penetrating pores in the micro-porous film, and suitably 5 to 5,000 sec/100cc cm². When the gas permeability is over 5,000 sec/100cc · cm², filling procedure of the substance may become difficult. When it is below 5 sec/100cc - cm², desired optical characteristics are often not exhibited. Gas permeability is measured according to JIS P-8117.

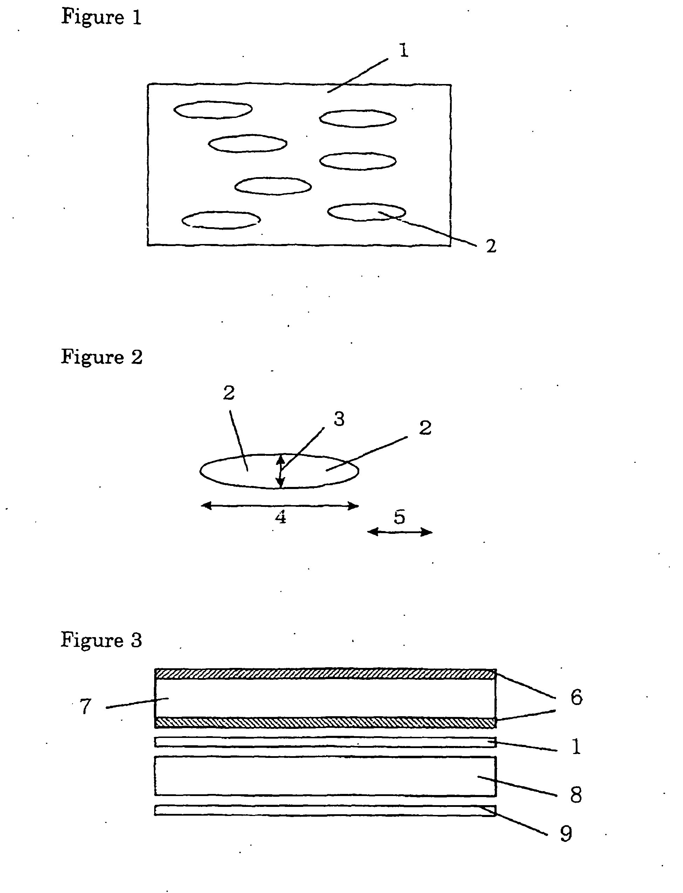

As shown in Figure 1, micro pores observed on the surface or inside of a film are substantially in ellipse form. The ellipse form includes ellipse forms such as an oval form, double convex lens form and the like in a broad sense, and it is not restricted as long as the form has a major axis and a minor axis, differing from circular form.

The ratio of the major axis to the minor axis of the ellipse [(major axis/minor axis), hereinafter, this ratio is referred to as aspect ratio] is over 1, suitably from 1.01 to 50, more suitably from 3 to 30, and further suitably from 4 to 30.

The directions along the major axis of the micro pores on the surface of the film are oriented to substantially one direction.

The minor axis size of the ellipse is required to be less than the wavelength of light. It is suitably 50% or less of the wavelength of light.

The major axis size of the ellipse is required to be equal to or more than the wavelength of light. It is suitably more than twice of the wavelength of light.

The wavelength of light depends on the conditions in which the anisotropic scattering film of the present invention is used. As for a liquid crystal display, it usually means a wavelength in a visible light region (wavelength of 400 to 800nm).

The void fraction occupied by micro pores in the above-mentioned micro-porous film is from 30 to 85%, preferably from 50 to 75%. When the void fraction is less than 30%, sufficient transmittance is not obtained, and when over 85%, mechanical strength decreases.

The material used in the anisotropic scattering film is desirably a polymer from the standpoints of weight-lightening, and molding. The polymer is preferably a polymer which causes no change in optical properties and forms, when the anisotropic scattering film is used at a higher temperature or when exposed to a temperature during lamination onto a liquid crystal cell.

Regarding the glass transition temperature or softening temperature of a polymer, the lower limit is so determined that change in optical properties and shrinkage of a film do not occur at temperatures within a range in which a liquid crystal display is used. The glass transition temperature or softening temperature of a polymer is suitably from 40 to 250°C, more suitably from 50 to 230°C, further suitably from 60 to 200°C.

As the polymer, polyolefin-based polymers and the like are exemplified. Examples of the polyolefin-based polymers include: α-olefin homopolymer of ethylene, propylene, butene, pentene, hexane and the like ; a copolymer of ethylene-propylene, ethylene-butene, ethylene-pentene, ethylene-hexene and the like; and a blend thereof, without being limited.

Additives may be used for the purpose of improving mechanical strength of these polymers or improving adhesion of these polymers in lamination to an LCD cell. The kind and amount of additives are not particularly restricted providing they do not deteriorate the object of the present invention. Examples of the additives include, anti-oxidant, light stabilizer, heat-stabilizer, lubricant, dispersing agent, UV absorber, white pigment, fluorescent whitening agent, without being limited.

The film thickness of the above-mentioned micro-porous film is not particularly restricted, and preferably from 1 to 500 µm, further preferably from 20 to 200 µm. When the film thickness is less than 1 µm, sufficient scattering is not obtained, and when over 500 µm, light does not transmit sufficiently.

The micro-porous film may be a laminated film containing two or more of film.

As the method of producing a porous film, the following methods are exemplified.
(1) A method in which fillers are added to a resin, and a film is formed then drawn (JP-B No. 55-9131).
(2) A method in which micro particles are synthesized in a molten polymer, and a film is formed then drawn (JP-A No. 10-287758).
(3) A method in which fillers and plasticizers are added to a resin, and a film is formed then drawn (JP-B No. 7-15021).
(4) A method in which fillers which have been surface-treated are added to a resin, and a film is formed then drawn (JP-A No. 63-210144).
(5) A method in which fillers and a crystal nucleating agent are added to a resin, and a film is formed then drawn (JP-A No. 64-54042).
(6) A method in which an incompatible resin is added to a resin, and a film is formed then drawn (JP-A No. 4-142341).
(7) A method in which an extractable substance is added to a resin, and a film is formed and the extractable substance is extracted and drawn (JP-A No. 1-201342).
(8) A method in which a crystalline resin is molded into a film which is drawn by a solvent stretch method (JP-B No. 2-19141).
(9) A method in which a crystal nucleating agent are added to a crystalline resin, and a film is formed then drawn (JP-B No. 7-5780).
(10) A method using processes of cold drawing and hot drawing (JP-B No. 2-11620).
(11) A method in which a film obtained by a solvent cast method is dried and drawn (JP-A No. 5-98065).

A porous film can be produced by the above-mentioned various methods, and the micro-porous film used in the anisotropic scattering film of the present invention is required to be a film in which micro pores observed on the surface of the film is substantially in the form of ellipse, the ratio of the major axis to the minor axis (major axis/minor axis) of the ellipse is over 1, the minor axis size of the micro pore is smaller than the wavelength of light, directions of micro pores along the major axis are oriented to substantially one direction. The major axis size is preferably equal with the wavelength of light or longer.

The minor axis size of a micro pore can be controlled to a certain extent in producing a porous film. For example, when a porous film is obtained by molding a polymer resin, fine inorganic powder and plasticizer into a film while kneading and heat-melting them, then the resin is molded into a film, drawing the film along only a uni-axial direction or bi-axial direction, then, extracting off the fine inorganic powder and plasticizer and drying the film, the minor axis size can be controlled by changing the particle size of the fine inorganic micro powder used.

The ratio of the major axis to the minor axis (aspect ratio: major axis/minor axis) can be controlled by changing drawing ratio in drawing.

The drawing ratio is preferably in a range from 1.5 to 30-fold, further preferably in a range from 2 to 20-fold, in terms of area drawing ratio. The drawing may be performed along uni-axial direction or bi-axial direction, and in the case of bi-axial direction, it is desirable that the drawing ratios are different between the orthogonal two directions , to increase the aspect ratio of micro pores.

The above resultant micro-porous film may be drawn further (it may be referred to as "a secondary drawing").

The drawing at the time of manufacturing a micro-porous film (it may be referred to as a primary drawing") is preferably biaxial drawing in view of providing a high tear strength.

Since the secondary drawing is conducted in order to enlarge the aspect ratio of the elliptical form, and to arrange the direction of the major axis, it is suitable that the drawing contains uniaxial drawing, and it is more suitable that the drawing is substantially uniaxial drawing.

From the viewpoint of controlling the form of the micro pores, the width of the film, and the productivity, drawing ratio is suitably 1.2 to 10-fold, more suitably 1.3 to 5-fold.

The aspect ratio of elliptical form obtained by secondary drawing is suitably 3 to 30, more suitably 4 to 30.

A substance in the micro pores of the above-mentioned micro-porous film has a refractive index differing from the refractive index of the above-mentioned micro-porous film. The substance is not particularly restricted, but suitably colorless.

It is preferable that the difference between the refractive index of the above-mentioned micro-porous film and the refractive index of the above-mentioned substance is within a range based on back scattering. The back scattering means a phenomenon in which incident light is scattered in a hemisphere space in which a plane vertical to incident light is utilized as the bottom surface situated opposite to the incident direction.

The substance filled in the micro pores may be an inorganic substance, an organic substance or a gas such as air providing it has a refractive index differing from that of the micro-porous film. The substance may be either anisotropic or isotropic.

Examples of isotropic organic substances include, without being limited, polymethyl methacrylate, polybenzyl methacrylate, polyphenyl methacrylate, polydiallyl phthalate, polystyrene, poly P-boromophenyl methacrylate, polypentachlorophenyl methacrylate, polychlorostyrene, poly -α-naphthyl methacrylate polyvinylnaphthalene, polyvinylcarbazole, polypentabromophenyl methacrylate, bisvinylthiophenyl sulfide, bisepoxypropylthiophenyl sulfide, bismethacryloylthiophenyl sulfide, perchlorooctylethyl methacrylate, perfluorooctylethyl acrylate, acetone, methyl butyrate, 1-pentanol, cynnamaldehyde, carbon disulfide, 1,1,2,2-tetrabromoethane, 1-bromonaphthalene, acetaldehyde, acetonitrile, isobutyl alcohol, ethanol, 1-chloronaphthalene, 1-butanol, 2-butanol, t-butyl alcohol, 1-propanol, ethyl 2-propanolacetate, diethyl ether, dimethoxymethane and the like. These may be used alone or in combination.

The isotropic organic substance is preferably a polymerizable substance without being especially limited as long as it is transparent, and may be either thermoplastic, thermosetting or photopolymerizable type.

Examples of the photopolymerizable substance include: acryl monomers such as 2-ethylhexylacrylate, 2-hydroxyethylacrylate, neopentylglycol diacrylate, hexanediol diacrylate, diethleneglycol diacrylate, tripropyleneglycol diacrylate, polyethyleneglycol diacrylate, trimethylolpropane triacrylate, and pentaerythritol triacrylate; and acryl oligomers such as polyester acrylate, epoxy acrylate, and polyurethane acrylate.

For accelerating the polymerization, a polymerization initiator may also be added, and examples thereof include: 2-hydroxy-2-methyl-1-phenylpropane-1-one (Darocure 1173, manufactured by Merck), 1-hydroxycyclohexylphenylketone (Irgacure 184, manufactured by Chiba Specialty Chemicals), 1-(4-isopropylphenyl)-2-hydroxy-2-methylpropane-1-on (Darocure 1116, manufactured by Merck), benzylmethylketal (Irgacure 651, manufactured by Chiba Specialty Chemicals), 2-methyl-1-[4-(methylthio)phenyl]-2-morpholinopropane-1-on (Irgacure 907, manufactured by Chiba Specialty Chemicals), acylphosphineoxide (LUCIRIN TPO, manufactured by BASF) and the like. Examples of a heat polymerization initiator include peroxides such as BPO, t-butyl peroxide and the like, radical generators such as azobisisobutyronitrile (AIBN) and the like, and amine compounds such as ethylamine, n-butylamine, benzylamine, diethylenetriamine, tetramethylenepentamine, menthenediamine, diaminodiphenylmethane and the like.

As the substance in the micro pores, an anisotropic substance is suitable, and a liquid crystal is more suitable.

Moreover, it is suitable that the following formulas are satisfied,
0.01<|n-ne|<0.6
0 ≦ |n-no| <0.05
in the above formula, n is the refractive index of a micro-porous film, ne is the refractive index of the anisotropic substance to ordinary ray, and ne is the refractive index of the anisotropic substance to extraordinal ray. (ne> no).

The liquid crystal is not especially limited, but examples thereof include at least one compound selected from the group consisting of the following formulas (1), (2) and (3). 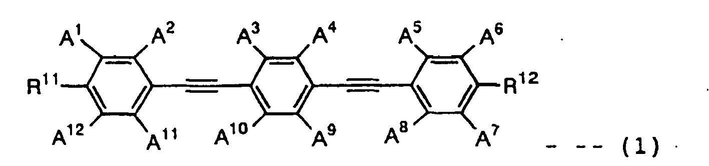 In the formula, A¹-A¹² represent, each independently, a hydrogen atom, a fluorine atom, an alkyl group or alkoxy group having 1-10 carbon atoms which may be substituted with fluorine. R¹¹ and R¹² represent, each independently, a hydrogen atom, a fluorine atom, a cyano group, SF₅, NCS (e.g. isothiocyanate group), 4-R¹³-(cycloalkyl) group, 4-R¹³-(cycloalkenyl group) or R¹⁴- (O)q¹¹ , R¹³ represents a hydrogen atom, a linear or branched alkyl group having 1-12 carbon atoms which may be substituted with fluorine, and R¹⁴ represents a linear or branched alkyl group having 1-12 carbon atoms which may be substituted with fluorine. q¹¹ represents 0 or 1 . 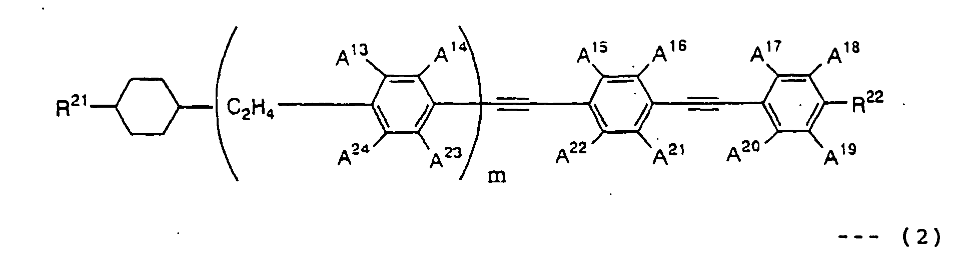 In the formula, A¹³-A²⁴ represent, each independently, a hydrogen atom, a fluorine atom, or an alkyl group having 1-10 carbon atoms. m is 0 or 1. R²¹ represents a hydrogen atom, a linear or branched alkyl group having 1-12 carbon atoms which may be substituted with fluorine. R²² represents R²¹, a fluorine atom, a cyano group, 4-R²³-(cycloalkyl) group, 4-R²³-(cycloalkenyl group) or R²⁴ - (O) q²¹ . R²³ represents a hydrogen atom, a linear or branched alkyl group having 1-12 carbon atoms which may be substituted with fluorine, and R²⁴ represents a linear or branched alkyl group having 1-12 carbon atoms which may be substituted with fluorine. q²¹ represents 0 or 1 . 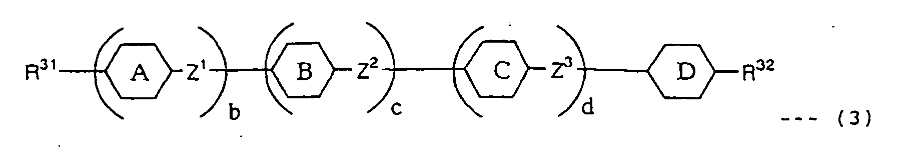 In the formula (3), ring A, ring B, ring C and ring D, each independently represents, 1,4-phenylene, 1,4-cyclohexylene, 1,4-cyclohexenylene, 4,1-cyclohexenylene, 2,5-cyclohexenylene, 5,2-cyclohexenylene, 3,6-cyclohexenylene, 6,3-cyclohexenylene, 2,5-pyrimidinediyl, 5,2-pyrimidinediyl, 2,5-pyridinediyl, 5,2-pyridinediyl, 2,5-dioxanediyl or 5,2-dioxanediyl. The hydrogen atom on ring A, ring B, ring C, and ring D may be substituted with a fluorine atom. R31 and R32 represent a hydrogen atom, a fluorine atom, fluoromethyl group, difluoromethyl group, trifluoromethyl group, fluoromethoxy group, difluoromethoxy group, trifluoromethoxy group, cyano group, an alkyl group having 1-12 carbon atoms, an alkenyl group having 3-12 carbon atoms, an alkynyl group having 3-12 carbon atoms, an alkoxy group having 1-12 carbon atoms, an alkenyloxy group having 3-12 carbon atoms, an alkynyloxy group having 3-12 carbon atoms, an alkoxyalkyl group having 2-16 carbon atoms, or an alkoxyalkenyl group having 3-16 carbon atoms. The methylene group in these alkyl group, alkenyl group, and alkynyl group, may be substituted with oxygen atom, sulfur atom, and silicon atom, and can be either linear or branched.

Z1, Z2, and 23 represent, each independently, -COO-, -OCO-, -OCH₂-, -CH₂O-, an alkylene group having 1-5 carbon atoms, an alkenylene group having 2-5 carbon atoms, an alkynylene group having 2-5 carbon atoms, or a single bond. And b, c and d are 0 or 1 each independently, and satisfy b+c+d≧1.

Concrete examples of the compound represented by formula (1) are shown below.

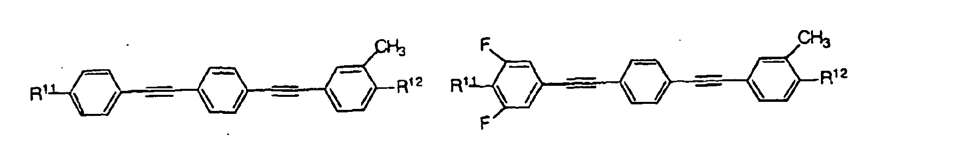

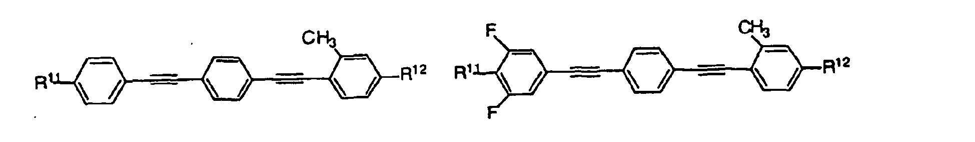

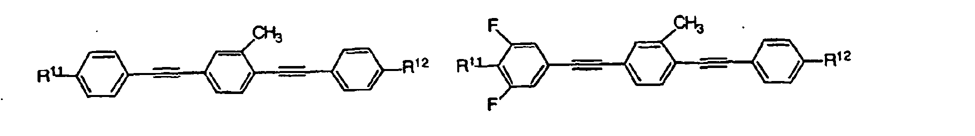

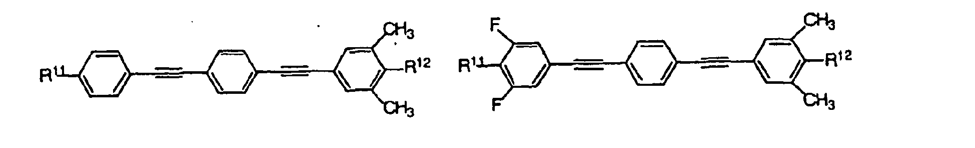

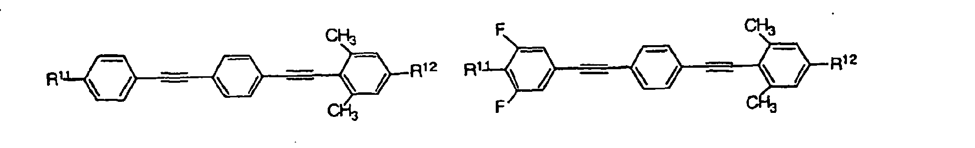

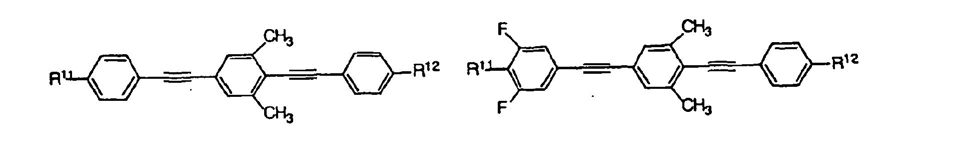

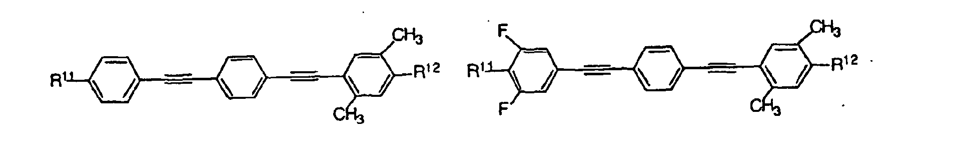

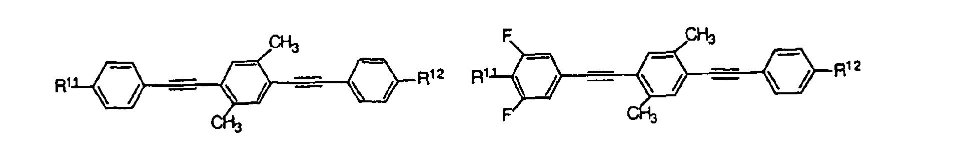

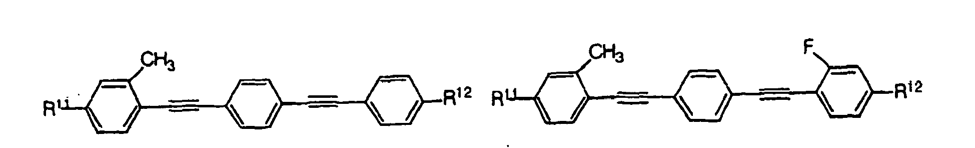

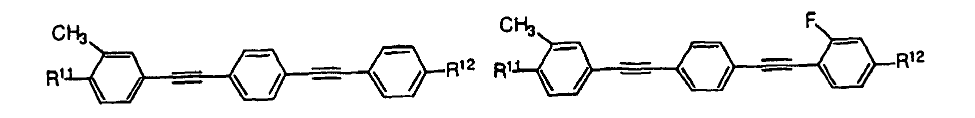

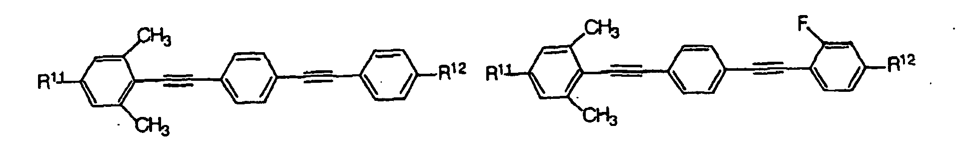

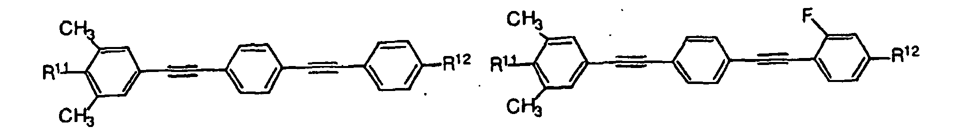

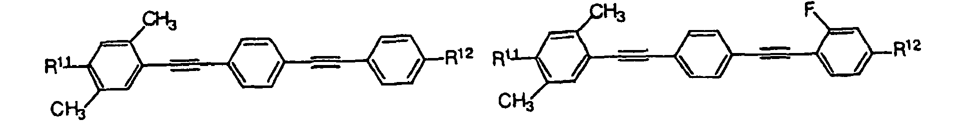

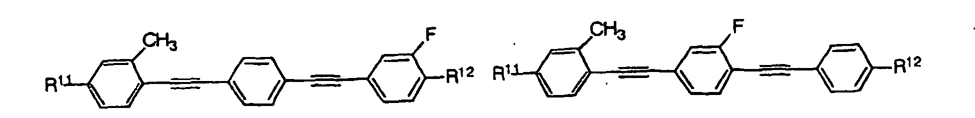

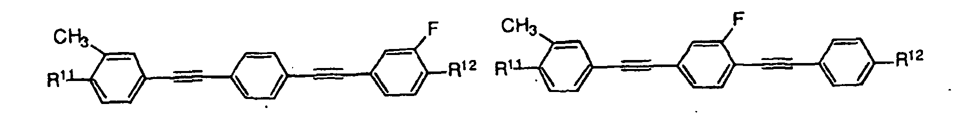

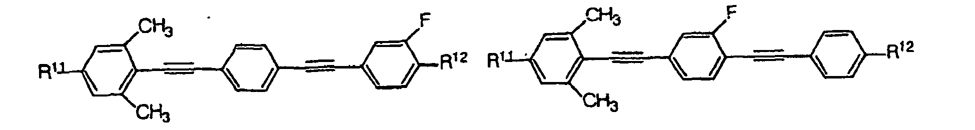

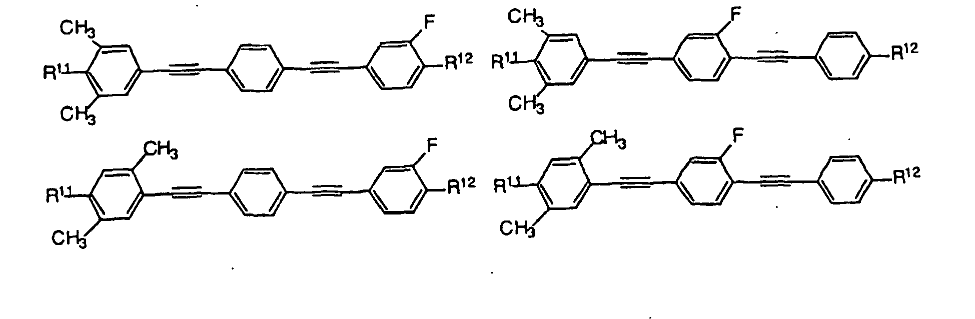

In the formula, concrete examples of R11 and R12 include: alkyl groups such as a hydrogen atom; fluorine atom; methyl group, ethyl group, propyl group, butyl group, pentyl group, hexyl group, heptyl group, octyl group, nonyl group, decyl group, undecyl group, and dodecyl group, and fluoroalkyl groups thereof substituted with fluorine atoms (for example, trifluoromethyl); alkoxy groups such as methoxy group, ethoxy group, propoxy group, butoxy group, pentyloxy group, hexyloxy group, octyloxy group, nonyloxy group, decyloxy group, undecyloxy group, dodecyloxy group, fluoroalkoxy groups thereof substituted with fluorine atoms (for example, methoxy group substituted with 1-3 fluorine atoms, and ethoxy group substituted with 1-5 fluorine atoms; alkoxyalkyl groups, such as methoxymethyl group, ethoxymethyl group, propoxymethyl group, butoxymethyl group, pentyloxymethyl group, hexyloxymethyl group, heptyloxymethyl group, octyloxymethyl group, nonyloxy methyl group, decyloxymethyl group, methoxyethyl group, ethoxy ethyl group, propoxyethyl group, butoxyethyl group, pentyloxy ethyl group, hexyloxyethyl group, heptyloxyethyl group, octyloxyethyl group, nonyloxyethyl group, decyloxyethyl group, methoxypropyl group, ethoxypropyl group, propoxypropyl group, butoxy propyl group, pentyloxypropyl group, hexyloxypropyl group, heptyloxypropyl group, octyloxypropyl group, nonyloxy propyl group, methoxybutyl group, ethoxybutyl group, propoxybutyl group, butoxybutyl group, pentyloxybutyl group, hexyloxybutyl group, heptyloxybutyl group, octyloxybutyl group, methoxypentyl group, ethoxypentyl group, propoxypentyl group, butoxypentyl group, pentyloxypentyl group, hexyloxypentyl group, heptyloxypentyl group, and fluoroalkoxyalkyl groups thereof substituted with fluorine atoms; branched alkyl groups, such as 2-methylpropyl group, 2-methyl butyl group, 3-methylbutyl group, and 3-methyl pentyl group, and branched fluoroalkyl groups thereof substituted with fluorine atoms; branched alkyloxy groups, such as 2-methylbutyloxy group, 3-methylbutyloxy group, and 3-methylpentyloxy group, and branched fluoroalkyloxy groups thereof substituted with fluorine atoms; 4-alkyl-cycloalkyl groups, such as 4-methylcyclohexyl group, 4-ethylcyclohexyl group, 4-propylcyclohexyl group, 4-butylcyclohexyl group, 4-pentylcyclohexyl group, 4-hexylcyclohexyl group, 4-heptylcyclohexyl group, 4-octylcyclohexyl group, 4-nonylcyclohexyl group, and 4-decylcyclohexyl group, and 4-fluoroalkyl-cycloalkyl groups thereof substituted with fluorine atoms; 4-alkyl-cycloalkenyl groups, such as 4-propylcyclohexenyl group, 4-pentylcyclohexenyl group, and 4-fluoro alkyl-cycloalkenyl groups thereof substituted with fluorine atoms; cyano group; SF5; and NCS.

Concrete examples of the compound represented by formula (2) are shown below.

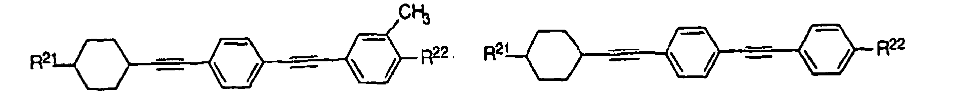

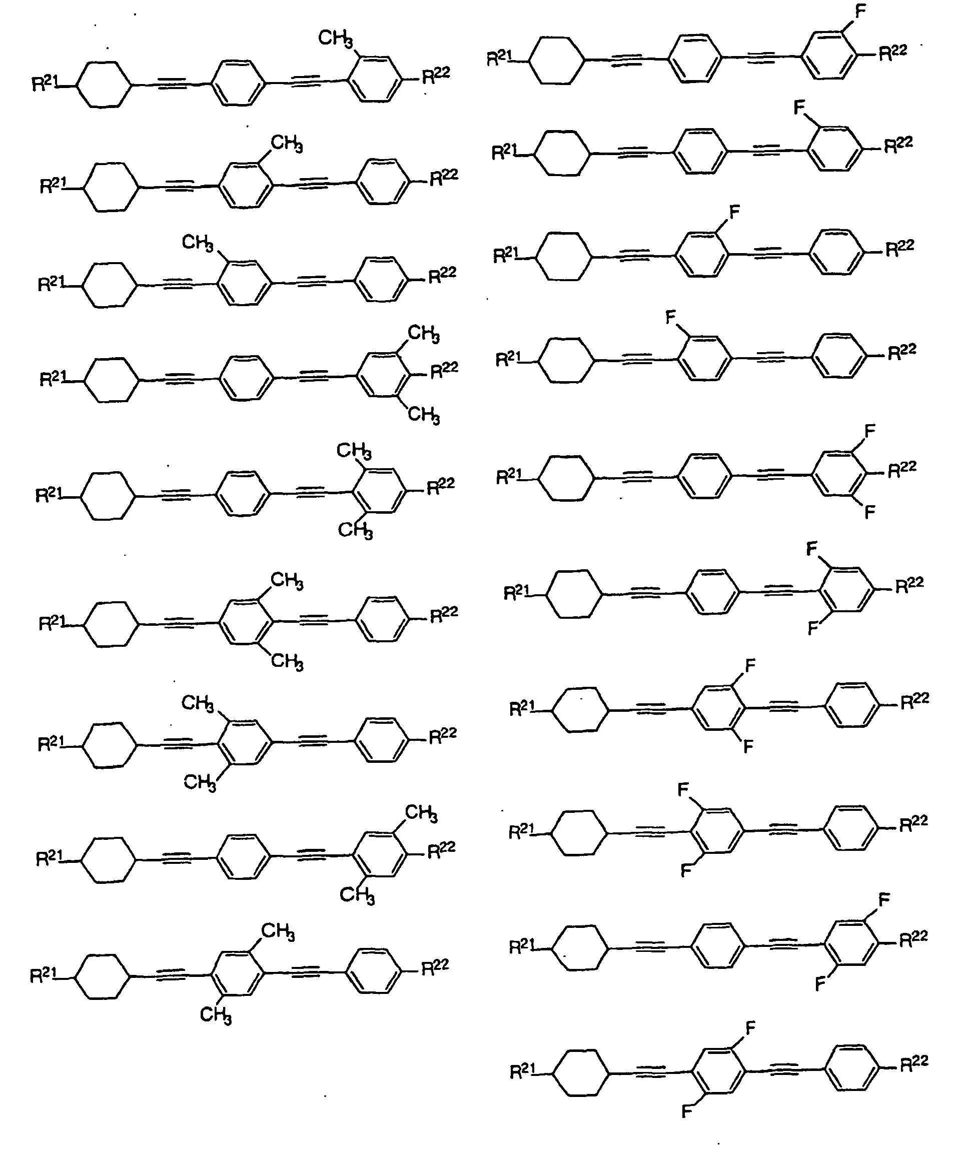

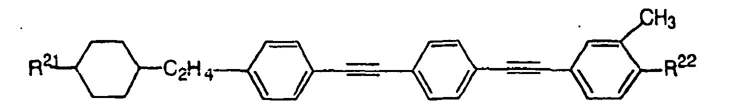

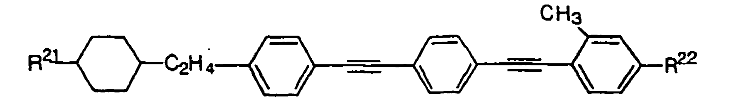

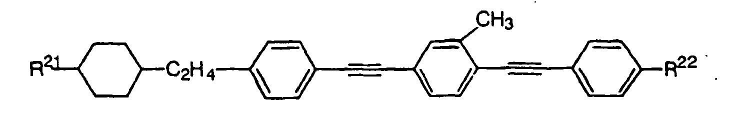

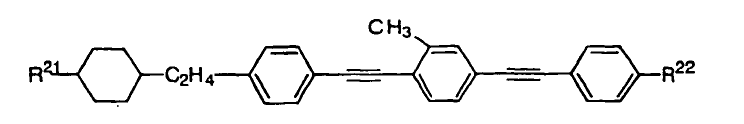

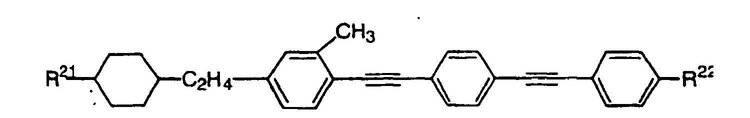

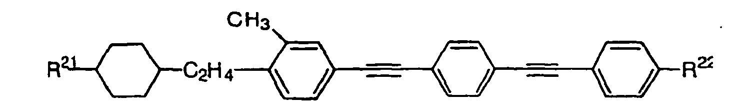

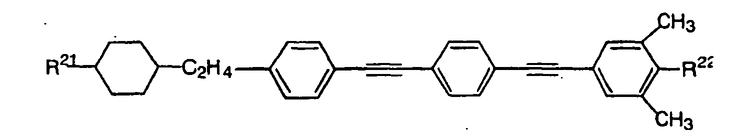

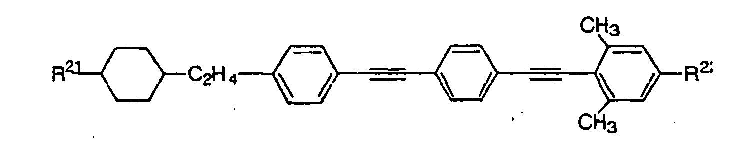

In the formula, concrete examples of R21 and R22 include: hydrogen atom; fluorine atom; alkyl groups such as methyl group, ethyl group, propyl group, butyl group, pentyl group, hexyl group, heptyl group, octyl group, nonyl group, decyl group, undecyl group and dodecyl group, and fluoroalkyl groups thereof substituted with fluorine atoms (for example, trifluoromethyl); alkoxy groups , such as methoxy group, ethoxy group, propoxy group, butoxy group, pentyloxy group, hexyloxy group, octyloxy group, nonyloxy group, decyloxy group, undecyloxy group, dodecyloxy group, fluoroalkoxy groups thereof substituted with fluorine atoms (for example, methoxy group substituted with 1-3 fluorine atoms, and ethoxy group substituted with 1-5 fluorine atoms; alkoxyalkyl groups, such as methoxymethyl group, ethoxymethyl group, propoxymethyl group, butoxymethyl group, pentyloxymethyl group, hexyloxymethyl group, heptyloxymethyl group, octyloxymethyl group, nonyloxymethyl group, decyloxymethyl group, methoxyethyl group, ethoxyethyl group, propoxyethyl group, butoxyethyl group, pentyloxyethyl group, hexyloxyethyl group, heptyloxyethyl group, octyloxyethyl group, nonyloxyethyl group, decyloxyethyl group, methoxypropyl group, ethoxypropyl group, propoxypropyl group, butoxypropyl group, pentyloxypropyl group, hexyloxypropyl group, heptyloxypropyl group, octyloxypropyl group, nonyloxypropyl group, methoxybutyl group, ethoxybutyl group, propoxybutyl group, butoxybutyl group, pentyloxybutyl group, hexyloxybutyl group, heptyloxybutyl group, octyloxybutyl group, methoxypentyl group, ethoxypentyl group, propoxypentyl group, butoxypentyl group, pentyloxypentyl group, hexyloxypentyl group, heptyloxypentyl group, and fluoroalkoxyalkyl groups thereof substituted with fluorine atoms; branched alkyl groups, such as 2-methylpropyl group, 2-methylbutyl group, 3-methylbutyl group, and 3-methylpentyl group, and branched fluoroalkyl groups thereof substituted with fluorine atoms; branched alkyloxy groups, such as 2-methylpropyloxy group, 2-methylbutyloxy group, 3-methylbutyloxy group, and 3-methylpentyloxy group, and branched fluoroalkyloxy groups thereof substituted with fluorine atoms; 4-alkyl-cycloalkyl groups, such as 4-methylcyclohexyl group, 4-ethylcyclohexyl group, 4-propylcyclohexyl group, 4-butylcyclohexyl group, 4-pentylcyclohexyl group, 4-hexylcyclohexyl group, 4-heptylcyclohexyl group, 4-octylcyclohexyl group, 4-nonylcyclohexyl group, and 4-decylcyclohexyl group, and 4-fluoroalkyl-cycloalkyl groups thereof substituted with fluorine atoms; 4-alkyl-cycloalkenyl groups, such as 4-propylcyclohexenyl group, 4-pentylcyclohexenyl group, and 4-fluoroalkyl-cycloalkenyl groups thereof substituted with fluorine atoms; cyano group; SF5; and NCS.

Concrete examples of the compound represented by formula (3) are shown below.

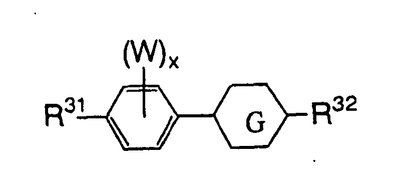

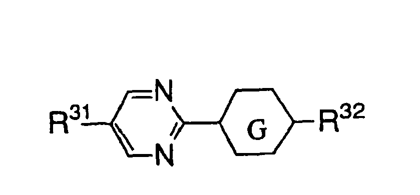

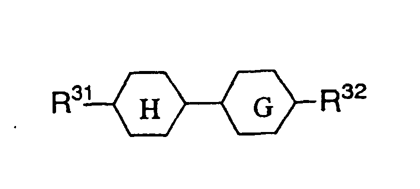

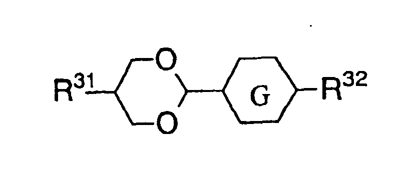

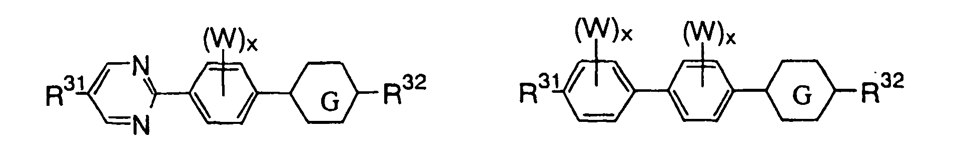

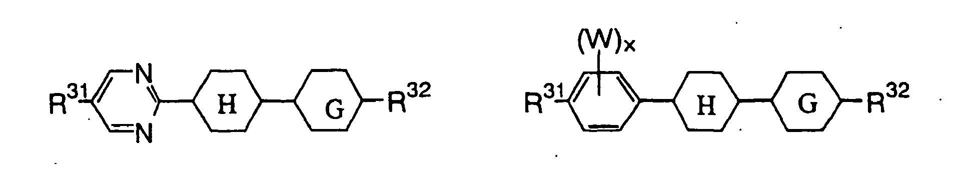

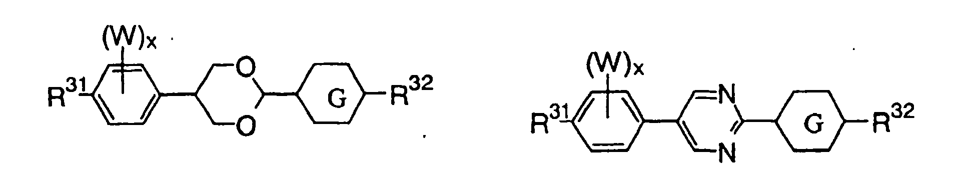

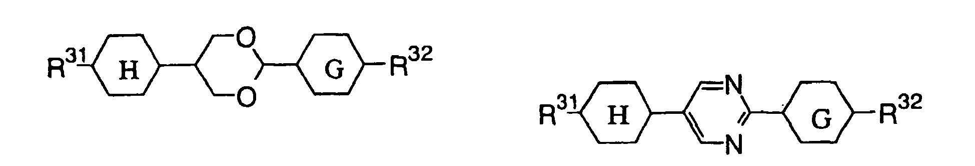

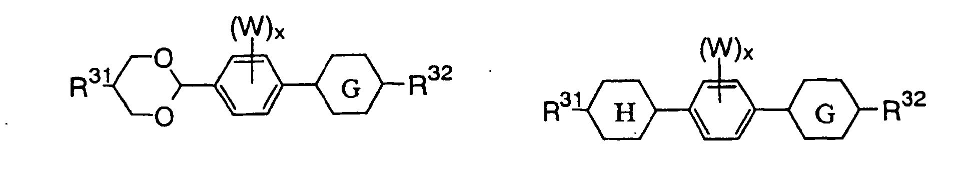

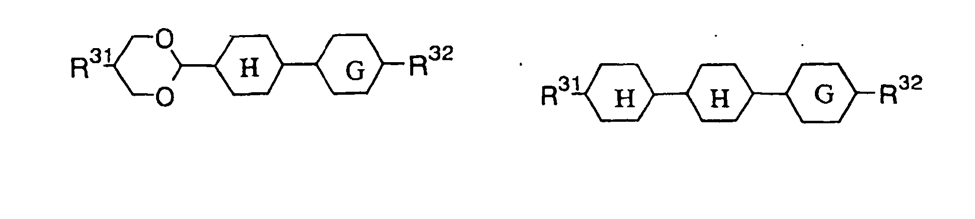

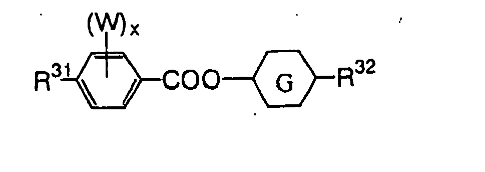

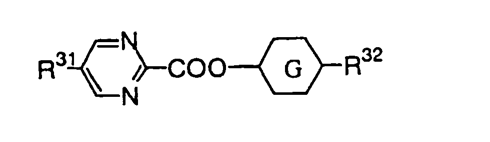

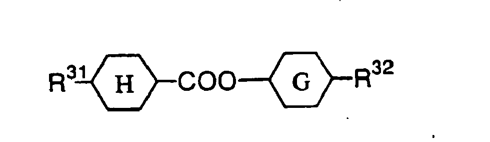

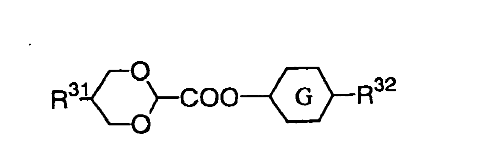

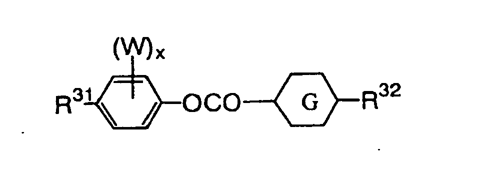

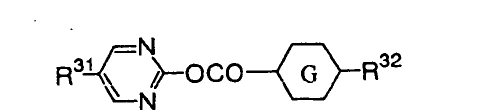

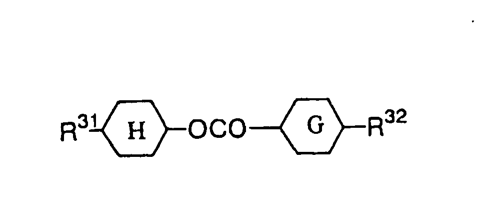

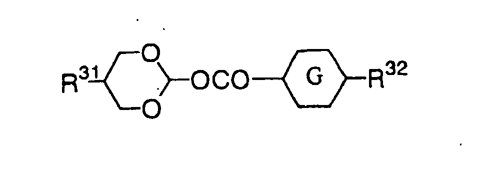

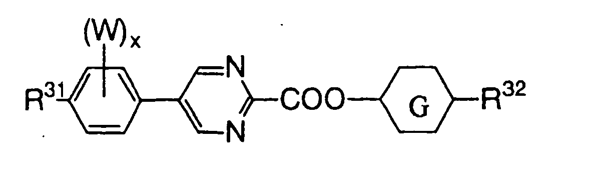

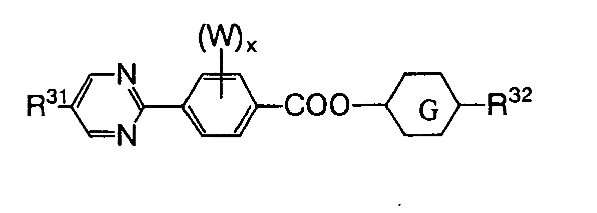

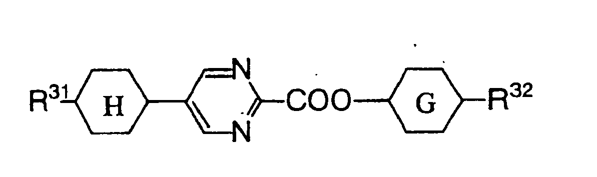

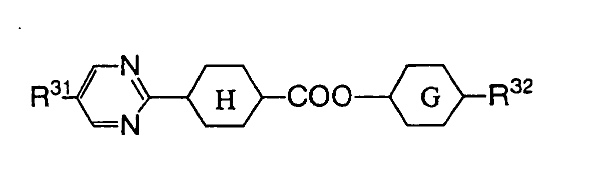

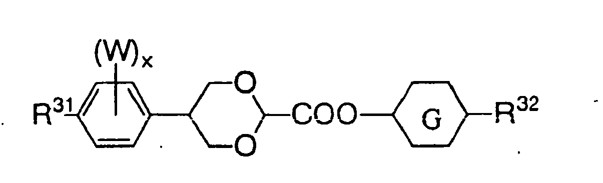

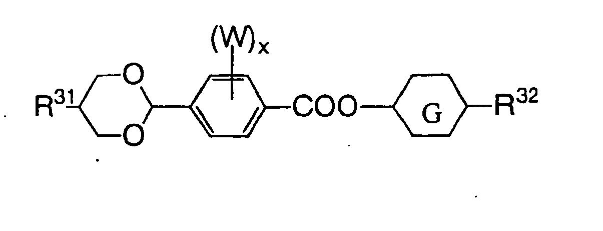

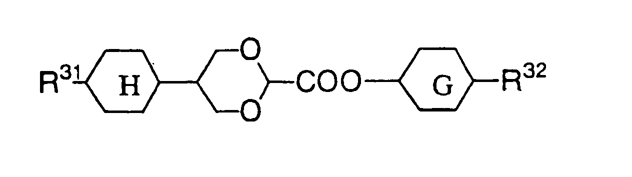

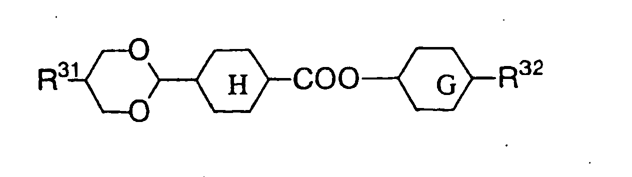

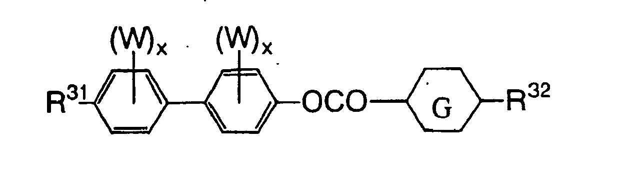

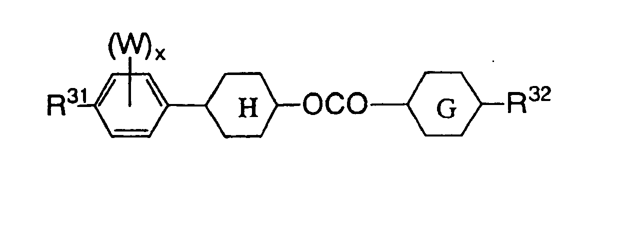

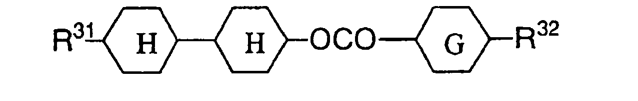

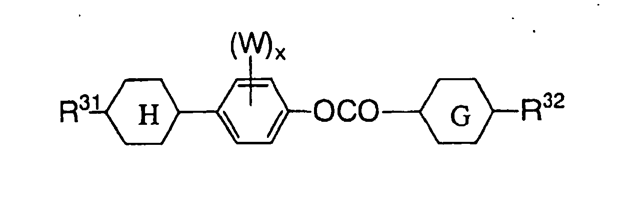

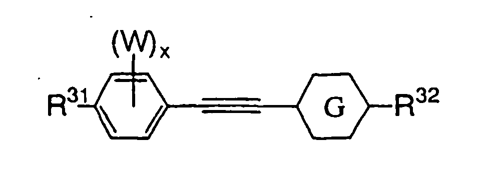

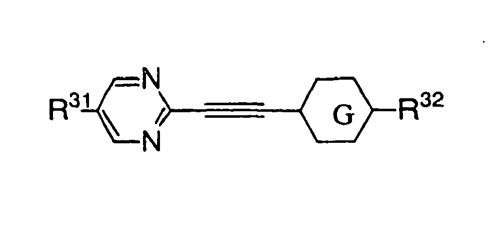

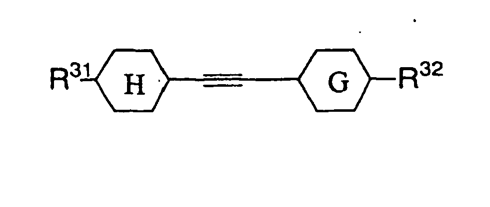

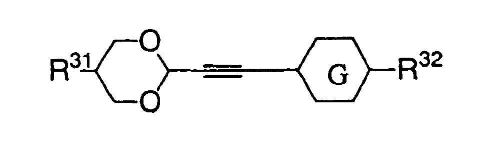

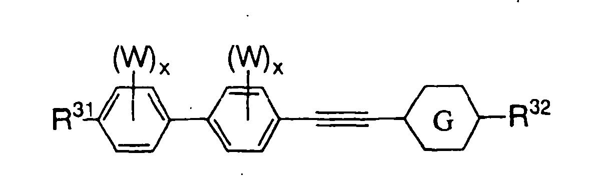

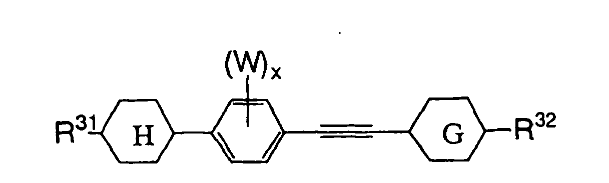

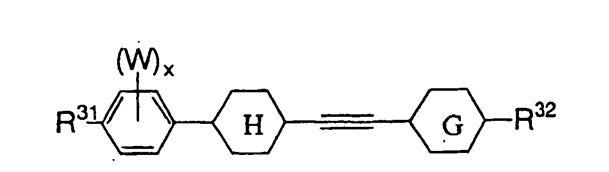

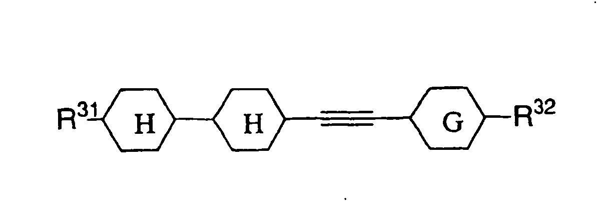

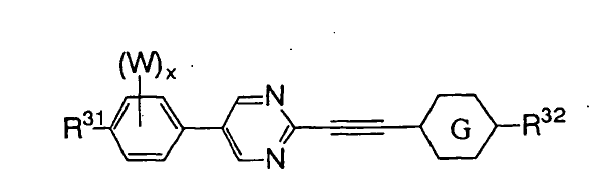

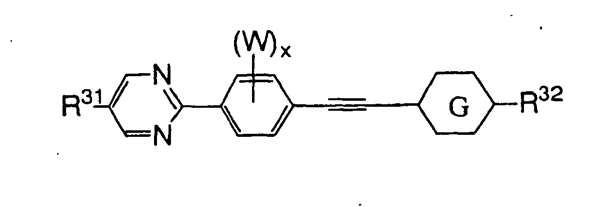

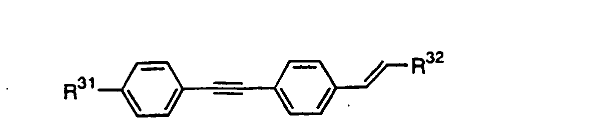

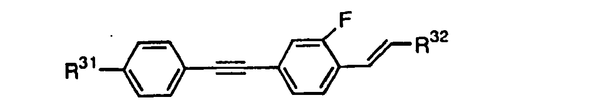

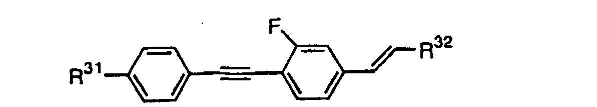

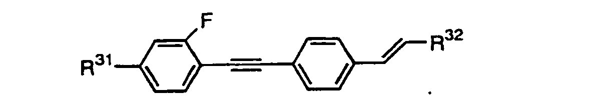

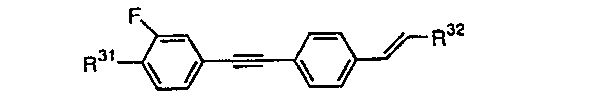

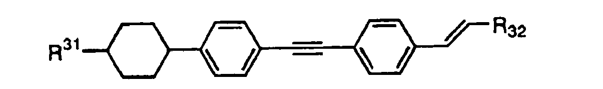

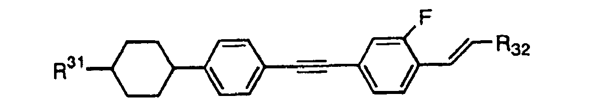

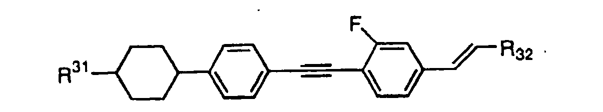

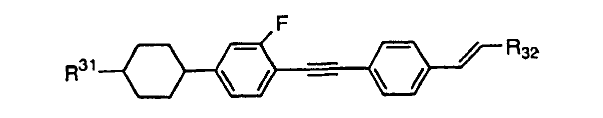

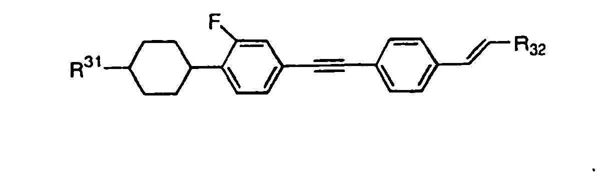

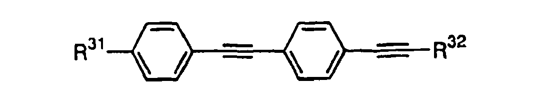

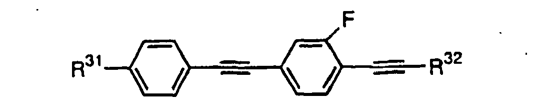

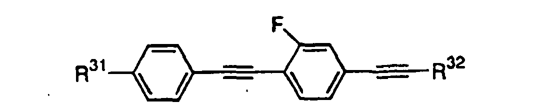

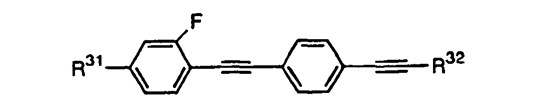

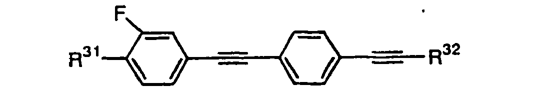

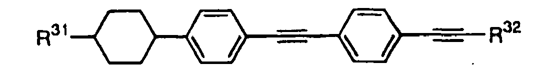

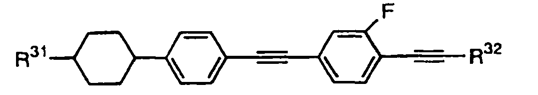

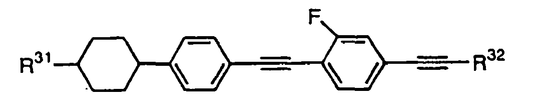

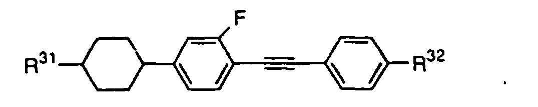

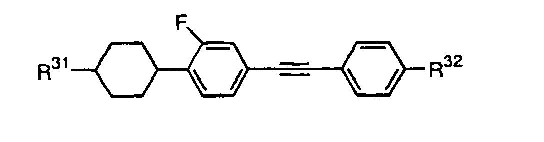

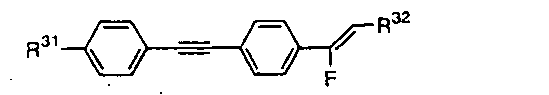

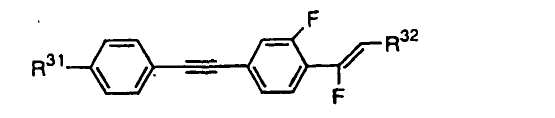

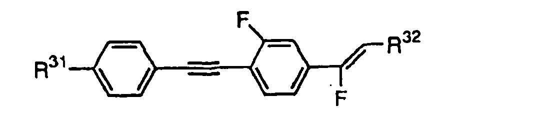

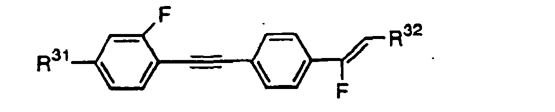

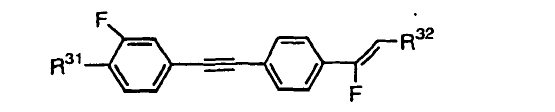

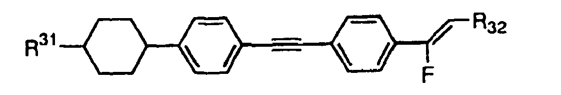

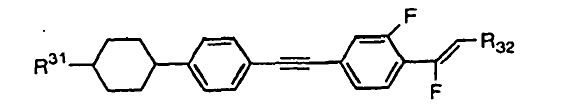

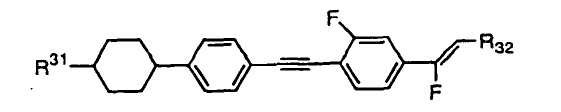

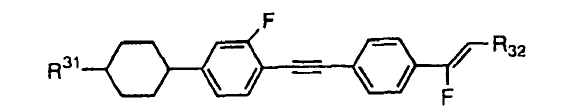

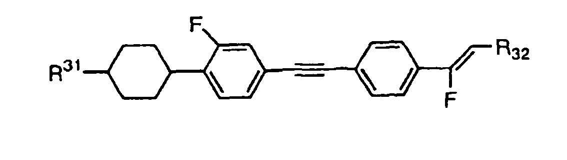

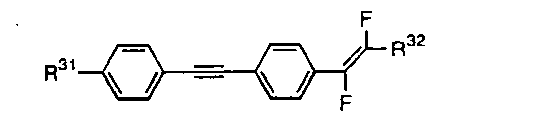

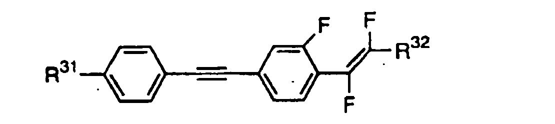

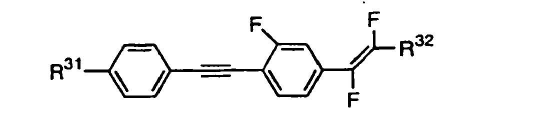

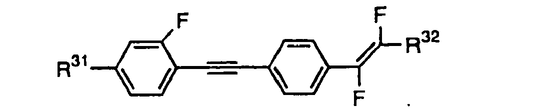

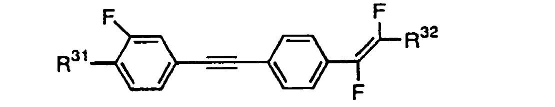

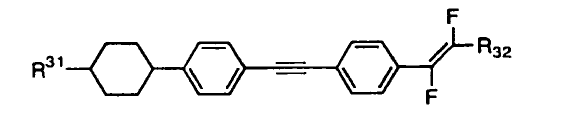

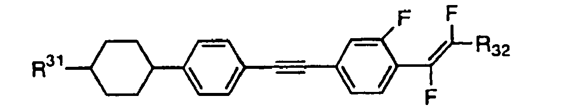

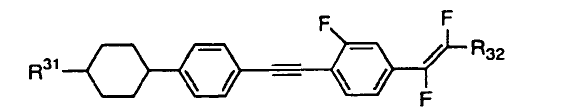

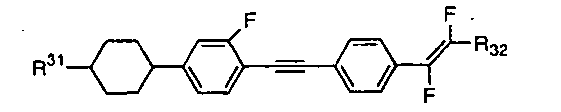

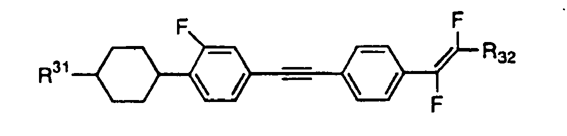

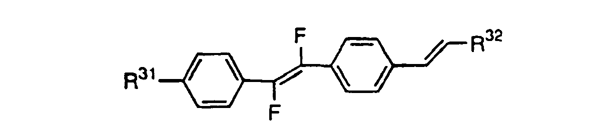

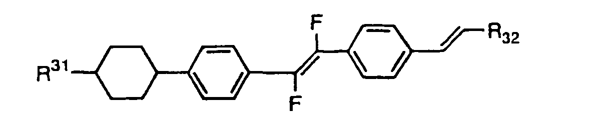

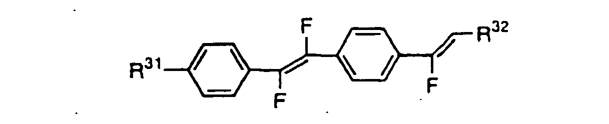

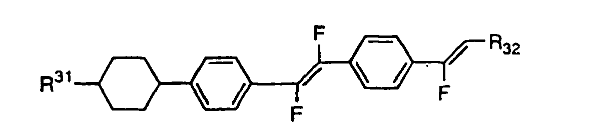

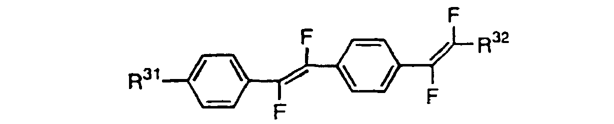

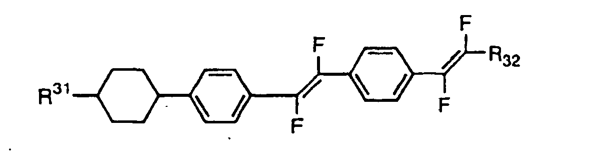

In the formula, concrete examples of R31 include: hydrogen atom; and following groups which may be substituted with fluorine, such as, methyl, ethyl, propyl, butyl, pentyl, hexyl, heptyl, octyl, nonyl, decyl, undecyl, dodecyl, ethenyl, propenyl, butenyl, pentenyl, hexenyl, heptenyl, octenyl, nonenyl, decenyl, undecenyl, dodecenyl, methoxy, ethoxy, propoxy, butoxy, pentyloxy, hexyloxy, heptyloxy, octyloxy, nonyloxy, decyloxy, undecyloxy, dodecyloxy, vinyloxy, propenyloxy, butenyloxy, pentenyloxy, hexynyloxy, heptenyloxy, octenyloxy, nonenyloxy, decenyloxy, propynyloxy, butynyloxy, pentynyloxy, hexynyloxy, heptynyloxy, octynyloxy, nonynyloxy, decynyloxy, undecynylloxy, dodecynyloxy, methoxymethyl, ethoxymethyl, propoxymethyl, butoxymethyl, pentyloxymethyl, hexyloxymethyl, heptyloxy methyl, octyloxy methyl, nonyloxymethyl, decyloxymethyl, methoxyethyl, ethoxyethyl, propoxyethyl, butoxyethyl, pentyloxyethyl, hexyloxyethyl, heptyloxyethyl, octyloxyethyl, nonyloxyethyl, decyloxyethyl, methoxypropyl, ethoxypropyl, propoxypropyl, butoxypropyl, pentyloxypropyl, hexyloxypropyl, heptyloxypropyl, octyloxypropyl, nonyloxypropyl, decyloxypropyl, methoxybutyl, ethoxybutyl, propoxybutyl, butoxybutyl, pentyloxybutyl, hexyloxybutyl, heptyloxybutyl, octyloxybutyl, nonyloxybutyl, decyloxybutyl, methoxypentyl, ethoxypentyl, propoxypentyl, butoxypentyl, pentyloxypentyl, hexyloxypentyl, heptyloxypentyl, octyloxypentyl, nonyloxypentyl, and decyloxypentyl.

Concrete examples of R32 include: hydrogen atom, fluorine atom, fluoromethyl group, difluoromethyl group, trifluoromethyl group, fluoromethoxy group, difluoromethoxy group, trifluoromethoxy group, cyano group; and following groups which may be substituted with fluorine, such as, methyl, ethyl, propyl, butyl, pentyl, hexyl, heptyl, octyl, nonyl, decyl, undecyl, dodecyl, ethenyl, propenyl, butenyl, pentenyl, hexenyl, heptenyl, octenyl, nonenyl, decenyl, undecenyl, dodecenyl, methoxy, ethoxy, propoxy, butoxy, pentyloxy, hexyloxy, heptyloxy, octyloxy, nonyloxy, decyloxy, undecyloxy, dodecyloxy, vinyloxy, propenyloxy, butenyloxy, pentenyloxy, hexynyloxy, heptenyloxy, octenyloxy, nonenyloxy, decenyloxy, propynyloxy, butynyloxy, pentynyloxy, hexynyloxy, heptynyloxy, octynyloxy, nonynyloxy, decynyloxy, undecynylloxy, dodecynyloxy, methoxymethyl, ethoxymethyl, propoxymethyl, butoxymethyl, pentyloxymethyl, hexyloxymethyl, heptyloxymethyl, octyloxymethyl, nonyloxymethyl, decyloxymethyl, methoxyethyl, ethoxyethyl, propoxyethyl, butoxyethyl, pentyloxyethyl, hexyloxyethyl, heptyloxyethyl, octyloxyethyl, nonyloxyethyl, decyloxyethyl, methoxypropyl, ethoxypropyl, propoxypropyl, butoxypropyl, pentyloxypropyl, hexyloxypropyl, heptyloxypropyl, octyloxypropyl, nonyloxypropyl, decyloxypropyl, methoxybutyl, ethoxybutyl, propoxybutyl, butoxybutyl, pentyloxybutyl, hexyloxybutyl, heptyloxybutyl, octyloxybutyl, nonyloxybutyl, decyloxybutyl, methoxypentyl, ethoxypentyl, propoxypentyl, butoxypentyl, pentyloxypentyl, hexyloxypentyl, heptyloxypentyl, octyloxypentyl, nonyloxypentyl, and decyloxypentyl. W represents a hydrogen atom or a fluorine atom. X is an integer of 0 to 3.

In the formula, 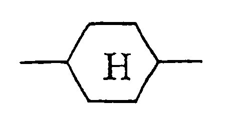 represents 1,4-cyclohexylene.

In the formula, 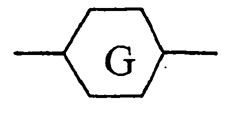 represents following groups which may be substituted with fluorine, such as 1,4-phenylene, 1,4-cyclohexylene, 1,4-cyclohexenylene, 4,1-cyclohexenylene, 2,5-cyclohexenylene, 5,2-cyclohexenylene, 3,6-cyclohexenylene, 6,3-cyclohexenylene, 2,5-pyrimidinediyl, 5,2-pyrimidinediyl, 2,5-pyridinediyl, 5,2-pyridinediyl, 2,5-dioxanediyl or 5,2-dioxanediyl.

Suitably, the above ring G is 1,4-cyclohexylene, 1,4-cyclohexenylene, 4,1-cyclohexenylene, 2,5-cyclohexenylene, 5,2-cyclohexenylene, 3,6-cyclohexenylene and 6,3-cyclohexenylene.

The above liquid crystal can be used with mixing a polymerizable substance.

As the polymerizable substance, either of thermoplastic, thermosetting or photopolymerizable type substance can be used. As the examples of the photopolymerizable type substances, suitably used are the photopolymerizable isotropic organic substances exemplified before.

For accelerating the polymerization, a polymerization initiator may also be added to the above mixture of a liquid crystal and a polymerizable substance. As the examples of such an initiator, suitably used are the photopolymerization initiators exemplified before.

Next, a method for producing the anisotropic scattering film of the present invention will be explained.

The anisotropic scattering film of the present invention is produced, for example, by filling a substance having a different refractive index from the micro-porous film in the micro-pores of the film. The filling method is not particularly restricted, and the filled substance is desirably in liquid or liquid crystalline state at room temperature (about 20°C). When it is not in liquid or liquid crystalline state at room temperature, it may be heated, if necessary, to be changed into liquid or liquid crystalline state, or it may be dissolved in a solvent to give a solution which is filled in micro pores before removal of the solvent.

When the filled substance is a polymerizable substance, it may be sandwiched between films or glass plates and polymerized, though the means thereof is not restricted.

The anisotropic scattering film thus obtained has a dependency on polarized light of transmittance-scattering, i.e., scattering anisotropy, to a polarizing component of a polarized light.

Moreover, when the substance filled in the micro-pores is an anisotropic substance, it is preferable that the anisotropic substance is oriented to substantially in one direction, further preferably is oriented to substantially in the direction of the major axis of ellipse in the region of this ellipse on the surface of a film.

A liquid crystal display using the above-mentioned anisotropic scattering film will be explained.

The display comprising a liquid crystal panel having a polarizing plate at least on the front surface side, an anisotropic scattering film above mentioned, a light guide, and a reflection plate or diffuse reflection plate piled in this order. The transmission axis of the above-mentioned anisotropic scattering film and the transmission axis of the above-mentioned liquid crystal panel being approximately parallel. It is preferable that a retardation plate, particularly, a 1/4 wavelength plate is placed between the light guide and the above-mentioned reflection plate, from the standpoint of effective utilization of light. The light guide is included in a back light device, and examples of the back light device include a side type back light device and a direct-under type back light device which effect illumination through a light guide from a light source.

Then, the polarization conversion in liquid crystal panel is explained.

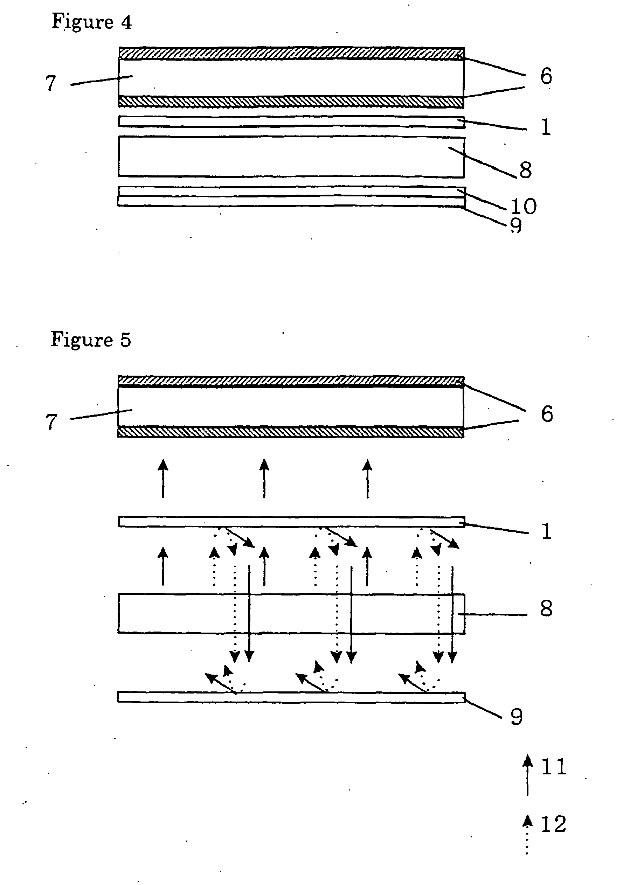

As shown in Fig. 5, light emitted from a back light is composed of orthogonally crossing polarized lights, e.g. polarized light having a plane of vibration parallel to the paper surface and light having a plane of vibration vertical to the paper surface.

The anisotropic scattering film of the present invention comprises a micro-porous film and a substance filled in micro pores of said micro-porous film, the micro pores and penetrating pores observed on the surface of the film are substantially in the form of ellipse, and the refractive index of the substance in micro pores differs from that of the micro-porous film.

In the anisotropic scattering film of the present invention, for example, polarized light having a plane of vibration vertical to the paper surface transmits, and polarized light having a plane of vibration parallel to the paper surface is back-scattered. Here, the direction parallel to the plane of vibration of transmitted polarized light is a transmission axis, and the direction vertical to the plane of vibration of scattered polarized light is a scattering axis.

The polarized light back-scattered by an anisotropic scattering film is reflected or scattering-reflected by a reflection plate or a diffuse reflection plate on the back side of the back light, and transmit the anisotropic scattering film again. Thus, the light which had been absorbed by a polarizing plate can be back-scattered and recycled and a liquid crystal display having improved luminance can be obtained.

### EXAMPLES

Next, the present invention is explained by the examples, but the scope of the present invention is not restricted by them.

Physical properties were measured as follows. Gas permeability: Measured with using Gurley Type Densometer (No.323 type, produced by Yasuda Seiki Seisaku-sho Co.) according to JIS P8117.

Progressive light transmittance : When progressive polarized light through a polarizing plate is input normally to an anisotropic scattering film, and the transmittance was measured by rotating a sample within a film plane. The maximum value of the transmitted light is the progressive light transmittance in a transmission state, and the minimum value is the progressive light transmittance in a scattering state. As a light source, a halogen lamp (SPH-100N, produced by Chuo Precision Industrial Co., Ltd.) was used, and the transmitted light was detected by Optical power meter (ML9001A, produced by Anritsu Corporation, wavelength of 400nm to 800nm).

Total light transmittance : A light source (GOLD LIGHT HL100E produced by Hoya-SCOTT Co.) through a polarizing plate is used as a polarized light source. Total light transmittance is measured by using an integrating sphere(RT-060-SF type produced by Labsphere Co.).
The total light transmittances of a transmission state and a scattering state when polarized light was input normally to an anisotropic scattering film, parallel to the transmission axis and the scattering axis of a sample respectively, were obtained by measuring the quantity of light with a luminancemeter(BM-8, produced by TOPCON Co.) according to JIS K7105.

Transmittance when polarized light having a vibration direction parallel to the transmission axis of an anisotropic scattering film was input, is defined as a transmittance in a transmission state, and transmittance when polarized light having a vibration direction vertical to the transmission axis of an anisotropic scattering film was input, is defined as a transmittance in a scattering state.

### Comparative Example 1

Toluene (refractive index 1.50) was filled in a polypropylene micro porous film having a refractive index of 1.50 and a thickness of 25 µm in which a micro pores observed by an electron microscope on the surface of the film was substantially in the form of ellipse, the average aspect ratio of the ellipse form was 16.7, the average minor axis size of micro pores was 0.12 *µ*m, the average major axis size was 2.0 µm, the directions along the major axis direction are substantially oriented to one direction, and gas permeability is 700 sec/100 cc·cm². This was sandwiched between glass plates (# 7059) manufactured by Corning.

Provided that the transmittance of the glass plate is taken for 100%, the progressive light transmittance of the above-mentioned film were 88.9% in transmission state and 87.2% in scattering state. The total light transmittance of the above-mentioned film obtained in the same manner, were 89.9% in a transmission state, and 89.5% in scattering state.

Thus when a substance having the same refractive index as that of a micro-porous film was filled in the micro pores of the micro-porous film, dependency on polarized light (scattering anisotropy) was scarcely observed.

### Example 1

1-bromonaphthalene (refractive index 1.66) was filled in a polypropylene micro porous film having a refractive index of 1.50 and a thickness of 25 µm in which a micro pores observed by an electron microscope on the surface of the film was substantially in the form of ellipse, the average aspect ratio of the ellipse form was 16.7, the average minor axis size of micro pores was 0.12 µm, the average major axis size was 2.0 µm, and directions along the major axis direction are substantially oriented to one direction, and gas permeability is 700 sec/100 cc·cm². This was sandwiched between glass plates (# 7059) manufactured by Corning.

Provided that the transmittance of the glass plate is taken for 100%, the progressive light transmittance of the above-mentioned film were 62.3% in transmission state and 42.5% in scattering state. The total light transmittance of the above-mentioned film obtained in the same manner, were 79.6% in a transmission state, and 65.4% in scattering state.

### Example 2

1-bromonaphthalene (refractive index 1.66) was filled in a polypropylene-polyethylene-polypropylene (3-layer structure) micro porous film having a refractive index of 1.50 and a thickness of 25 µm in which a micro pores observed by an electron microscope on the surface of the film was substantially in the form of ellipse, the average aspect ratio of the ellipse form was 10, the average minor axis size of micro pores was 0.2 µm, the average major axis size was 2.0 µm, and directions along the major axis direction are substantially oriented to one direction, and gas permeability is 521 sec/100 cc.cm². This was sandwiched between glass plates (# 7059) manufactured by Corning.

Provided that the transmittance of the glass plate is taken for 100%, the progressive light transmittance of the above-mentioned film were 70.0% in transmission state and 47.5% in scattering state. The total light transmittance of the above-mentioned film obtained in the same manner, were 85.2% in a transmission state, and 73.4% in scattering state.

### Example 3

A monomer prepared by adding 1 wt% of Irgacure 651 and 1 wt% of Irgacure 184 (manufactured by Chiba Specialty Chemicals) to MPV (manufactured by Sumitomo Seika Chemicals Co., Ltd., refractive index 1.70) was filled, on a polycarbonate film, in a polypropylene micro porous film having a refractive index of 1.50 and a thickness of 25 *µ*m in which a micro pores observed by an electron microscope on the surface of the film was substantially in the form of ellipse, the average aspect ratio of the ellipse form was 16.7, the average minor axis size of micro pores was 0.12 *µ*m, the average major axis size was 2.0 µm, the directions along the major axis direction are substantially oriented to one direction, and gas permeability is 700 sec/100 cc·cm². On this was laminated a polycarbonate film, and was pressed with a rubber roller to defoam.

The above-mentioned film was irradiated at 25°C with ultraviolet ray of 29 mW/cm² for 120 seconds using a ultraviolet ray irradiation apparatus having a mercury lamp as a light source, to cause polymerization.

Polycarbonate of the resulted film was peeled, and a film was obtained in which MPV filled in the polypropylene micro porous film had been polymerized.

Provided that the transmittance in the case of no film (blank) is taken for 100%, the progressive light transmittance of the above-mentioned film were 24.3% in transmission state and 14.8% in scattering state. The total light transmittance of the above-mentioned film obtained in the same manner, were 73.8% in a transmission state, and 63.1% in scattering state.

### Example 4

Acetone (refractive index 1.36) was filled in a polypropylene micro porous film having a refractive index of 1.50 and a thickness of 25 *µ*m in which a micro pores observed by an electron microscope on the surface of the film was substantially in the form of ellipse, the average aspect ratio of the ellipse form was 16.7, the average minor axis size of micro pores was 0.12 µm, the average major axis size was 2.0 µm, and directions along the major axis direction are substantially oriented to one direction, and gas permeability is 700 sec/100 cc.cm². This was sandwiched between glass plates (# 7059) manufactured by Corning.

Provided that the transmittance of the glass plate is taken for 100%, the progressive light transmittance of the above-mentioned film were 48.5% in transmission state and 44.5% in scattering state. The total light transmittance of the above-mentioned film obtained in the same manner, were 76.3% in a transmission state, and 70.3% in scattering state.

### Example 5

1-bromonaphthalene (refractive index 1.66) was filled in a polypropylene micro porous film having a refractive index of 1.50 and a thickness of 25 µm in which a micro pores observed by an electron microscope on the surface of the film was substantially in the form of ellipse, the average aspect ratio of the ellipse form was 28.6, the average minor axis size of micro pores was 0.21 *µ*m, the average major axis size was 6.0 µm, and directions along the major axis direction are substantially oriented to one direction, and gas permeability is 173 sec/100 cc·cm². This was sandwiched between glass plates (# 7059) manufactured by Corning.

Provided that the transmittance of the glass plate is taken for 100%, the progressive light transmittance of the above-mentioned film were 3.1% in transmission state and 1.6% in scattering state. The total light transmittance of the above-mentioned film obtained in the same manner, were 79.6% in a transmission state, and 68.7% in scattering state.

### Example 6

1-bromonaphthalene (refractive index 1.66) was filled in a polypropylene-polyethylene-polypropylene (3-layer structure) micro porous film having a refractive index of 1.50 and a thickness of 25 µm in which a micro pores observed by an electron microscope on the surface of the film was substantially in the form of ellipse, the average aspect ratio of the ellipse form was 22.2, the average minor axis size of micro pores was 0.09 µm, the average major axis size was 2.0 µm, and directions along the major axis direction are substantially oriented to one direction, and gas permeability is 628 sec/100 cc·cm². This was sandwiched between glass plates (# 7059) manufactured by Corning.

Provided that the transmittance of the glass plate is taken for 100%, the progressive light transmittance of the above-mentioned film were 67.8% in transmission state and 42.1% in scattering state. The total light transmittance of the above-mentioned film obtained in the same manner, were 82.9% in a transmission state, and 68.3% in scattering state.

### Example 7

Acetone (refractive index 1.36) was filled in a separator film for lithium secondary battery (H6022, produced by Asahi Chemical Industry) having a refractive index of about 1.50 and a thickness of 27 *µ*m in which a micro pores observed by an electron microscope on the surface of the film was substantially in the form of ellipse, the average aspect ratio of the ellipse form was 2, the average minor axis size of micro pores was 0.2 *µ*m, the average major axis size was 0.5 *µ*m, and directions along the major axis direction are substantially oriented to one direction, and gas permeability is 82 sec/100 cc·cm². This was sandwiched between glass plates (# 7059) manufactured by Corning.

Provided that the transmittance of the glass plate is taken for 100%, the progressive light transmittance of the above-mentioned film were 0.6% in transmission state and 0.2% in scattering state. The total light transmittance of the above-mentioned film obtained in the same manner, were 59.6% in a transmission state, and 44.1% in scattering state.

### Example 8

1-bromonaphthalene (refractive index 1.66) was filled in the porous film of Example 8. This was sandwiched between glass plates (# 7059) manufactured by Corning.

Provided that the transmittance of the glass plate is taken for 100%, the progressive light transmittance of the above-mentioned film were 12.4% in transmission state and 3.9% in scattering state. The total light transmittance of the above-mentioned film obtained in the same manner, were 70.4% in a transmission state, and 67.1% in scattering state.

### Example 9

The micro porous film of Example 8 was uniaxially drawn at 120°C in a drawing ratio of 2 to produce a film in which micro pores observed by an electron microscope on the surface of the film were substantially in the form of ellipse, the average aspect ratio of the ellipse form was 4, the average minor axis size of micro pores was 0.2 µm, the average major axis size was 1.0 µm, and directions along the major axis direction are substantially oriented to one direction, and gas permeability is 694 sec/100 cc·cm².

Provided that the transmittance in the case of no film (blank) is taken for 100%, the progressive light transmittance of the above-mentioned film were 0.04% in transmission state and 0.02% in scattering state. The total light transmittance of the above-mentioned film obtained in the same manner, were 27.0% in a transmission state, and 18.2% in scattering state.

### Example 10

Acetone (refractive index 1.36) was filled in the micro porous film of Example 10. This was sandwiched between glass plates (# 7059) manufactured by Corning.

Provided that the transmittance of the glass plate is taken for 100%, the progressive light transmittance of the above-mentioned film were 17.6% in transmission state and 4.4% in scattering state. The total light transmittance of the above-mentioned film obtained in the same manner, were 71.2% in a transmission state, and 49.5% in scattering state.

### Example 11

1-bromonaphthalene (refractive index 1.66) was filled in a polyethylene-polyethylene-polyethylene micro porous film having a refractive index of 1.50 and a thickness of 25 *µ*m in which micro pores observed by an electron microscope on the surface of the film were substantially in the form of ellipse, the average aspect ratio of the ellipse form was 5.6, the average minor axis size of micro pores was 0.18 *µ*m, the average major axis size was 1.0 *µ*m, and directions along the major axis direction are substantially oriented to one direction, and gas permeability is 700 sec/100 cc·cm². This was sandwiched between glass plates (# 7059) manufactured by Corning.

Provided that the transmittance of the glass plate is taken for 100%, the progressive light transmittance of the above-mentioned film were 70.9% in transmission state and 42.5% in scattering state. The total light transmittance of the above-mentioned film obtained in the same manner, were 84.1% in a transmission state, and 66.5% in scattering state.

### Example 12

A separator film for lithium secondary battery (SETELA, produced by Tohnen Chemical Co.; refractive index of about 1.50, thickness of 26 µm, gas permeability is 725 sec/100 cc.cm²) was uniaxially drawn at 100°C in a drawing ratio of 1.9 to produce a micro porous film. Micro pores on the surface of the film observed by an electron microscope were substantially in the form of ellipse, and the average aspect ratio of the ellipse form was 2, the average minor axis size of micro pores was 0.1 µm which is shorter than the wavelength of light, the average major axis size was 0.4 µm which is longer than the wavelength of light, and directions along the major axis direction were substantially oriented to one direction. Acetone (refractive index 1.36) was filled in the micro porous film, and this was sandwiched between glass plates (# 7059) manufactured by Corning.

Provided that the transmittance of the glass plate is taken for 100%, the progressive light transmittance of the above-mentioned film were 39.8% in transmission state and 25.3% in scattering state. The total light transmittance of the above-mentioned film obtained in the same manner, were 83.0% in a transmission state, and 76.5% in scattering state.

### Example 13

An anisotropic substance (liquid crystal mixuture E9, produced by Merck & Co., refractive index no=1.52, ne=1.78), was filled in a polypropylene micro porous film having a refractive index of 1.50 and a thickness of 30 µm in which a micro pores observed by an electron microscope on the surface of the film was substantially in the form of ellipse, the average aspect ratio of the ellipse form was 10, the average minor axis size of micro pores was 0.3 µm, the average major axis size was 3.0 µm, and directions along the major axis direction are substantially oriented to one direction, and gas permeability is 3990 sec/100 cc.cm².

Provided that the transmittance in the case of no anisotropic scattering film (blank) is taken for 100%, the progressive light transmittance of the above-mentioned film were 30.0% in transmission state and 2.5% in scattering state. The total light transmittance of the above-mentioned film obtained in the same manner, were 85.3% in a transmission state, and 47.2% in scattering state.

### Example 14

80% by weight of an anisotropic substance (liquid crystal mixture E7 produced by Merck & Co., refractive index no=1.52, ne=1.75), 19.6% by weight of a monomer (KAYARAD HX-620, produced by Nippon Kayaku Co., Ltd.) and 0.4% by weight of Irgacure 651 (produced by Chiba Specialty Chemicals)were mixed to produce a anisotropic polymerizable substance, which was filled in a polypropylene-polyethylene-polypropylene (3-layer structure) micro porous film having a refractive index of 1.50 and a thickness of 25 µm in which a micro pores observed by an electron microscope on the surface of the film was substantially in the form of ellipse, the average aspect ratio of the ellipse form was 22.2, the average minor axis size of micro pores was 0.09 µm, the average major axis size was 2.0 µm, and directions along the major axis direction are substantially oriented to one direction. The above-mentioned film was irradiated by ultraviolet of 29mW/cm² at 25 °C for 120 seconds with using a UV irradiation machine having a mercury lamp as a light source, and the anisotropic polymerizable substance filled in the micro pores was polymerized.

Provided that the transmittance in the case of no anisotropic scattering film (blank) is taken for 100%, the progressive light transmittance of the above-mentioned film were 86.4% in transmission state and 43.6% in scattering state. The total light transmittance of the above-mentioned film obtained in the same manner, were 91.1% in a transmission state, and 76.0% in scattering state.

### Example 15

An anisotropic substance (liquid crystal mixture E9, produced by Merck & Co., refractive index no=1.52, ne=1.78), was filled in a polypropylene micro porous film having a refractive index of 1.50 and a thickness of 25 *µ*m in which a micro pores observed by an electron microscope on the surface of the film was substantially in the form of ellipse, the average aspect ratio of the ellipse form was 16.7, the average minor axis size of micro pores was 0.12 µm, the average major axis size was 2.0 µm, and directions along the major axis direction are substantially oriented to one direction, and gas permeability is 700 sec/100 cc·cm².

Provided that the transmittance in the case of no anisotropic scattering film (blank) is taken for 100%, the progressive light transmittance of the above-mentioned film were 77.9% in transmission state and 37.0% in scattering state. The total light transmittance of the above-mentioned film obtained in the same manner, were 88.0% in a transmission state, and 64.7% in scattering state.

### Example 16

An anisotropic substance (liquid crystal mixture E9, produced by Merck & Co., refractive index no=1.52, ne=1.78), was filled in a polypropylene micro porous film having a refractive index of 1.50 and a thickness of 25 µm in which a micro pores observed by an electron microscope on the surface of the film was substantially in the form of ellipse, the average aspect ratio of the ellipse form was 28.6, the average minor axis size of micro pores was 0.21 *µ*m, the average major axis size was 6.0 µm, and directions along the major axis direction are substantially oriented to one direction, and gas permeability is 173 sec/100 cc·cm².

Provided that the transmittance in the case of no anisotropic scattering film (blank) is taken for 100%, the progressive light transmittance of the above-mentioned film were 49.8% in transmission state and 5.8% in scattering state. The total light transmittance of the above-mentioned film obtained in the same manner, were 89.1% in a transmission state, and 61.6% in scattering state.

### Example 17

An anisotropic substance (4'pentyl-4-biphenylcarbonitrile, produced by Aldrich 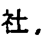 refractive index no=1.51, ne=1.68), was filled in a polypropylene-polyethyylene-polypropylene (3 layer structure) micro porous film having a refractive index of 1.50 and a thickness of 25 *µ*m in which a micro pores observed by an electron microscope on the surface of the film was substantially in the form of ellipse, the average aspect ratio of the ellipse form was 22.2, the average minor axis size of micro pores was 0.09 µm, the average major axis size was 2.0 µm, and directions along the major axis direction are substantially oriented to one direction, and gas permeability is 628 sec/100 cc cm².

Provided that the transmittance in the case of no anisotropic scattering film (blank) is taken for 100%, the progressive light transmittance of the above-mentioned film were 92.8% in transmission state and 39.8% in scattering state. The total light transmittance of the above-mentioned film obtained in the same manner, were 88.1% in a transmission state, and 82.7% in scattering state.

### Example 18

An anisotropic substance (liquid crystal mixture E9, produced by Merck & Co., refractive index no=1.52, ne=1.78), was filled in a polypropylene micro porous film having a refractive index of 1.50 and a thickness of 42 µm in which a micro pores observed by an electron microscope on the surface of the film was substantially in the form of ellipse, the average aspect ratio of the ellipse form was 15, the average minor axis size of micro pores was 0.2 µm, the average major axis size was 3.0 µm, and directions along the major axis direction are substantially oriented to one direction, and gas permeability is 1232 sec/100 cc·cm².

Provided that the transmittance in the case of no anisotropic scattering film (blank) is taken for 100%, the progressive light transmittance of the above-mentioned film were 58.1% in transmission state and 4.8% in scattering state. The total light transmittance of the above-mentioned film obtained in the same manner, were 84.0% in a transmission state, and 48.7% in scattering state.

### Example 19

An anisotropic substance (liquid crystal mixture E9, produced by Merck & Co., refractive index no=1.52, ne=1.78), was filled in a polypropylene-polyethyylene-polypropylene (3 layer structure) micro porous film having a refractive index of 1.50 and a thickness of 25 µm in which a micro pores observed by an electron microscope on the surface of the film was substantially in the form of ellipse, the average aspect ratio of the ellipse form was 22.2, the average minor axis size of micro pores was 0.09 *µ*m, the average major axis size was 2.0 µm, and directions along the major axis direction are substantially oriented to one direction, and gas permeability is 628sec/100 cc·cm².

Provided that the transmittance in the case of no anisotropic scattering film (blank) is taken for 100%, the progressive light transmittance of the above-mentioned film were 84.1% in transmission state and 26.7% in scattering state. The total light transmittance of the above-mentioned film obtained in the same manner, were 90.1% in a transmission state, and 67.3% in scattering state

### Example 20

An anisotropic substance (liquid crystal mixture E9, produced by Merck & Co., refractive index no=1.52, ne=1.78), was filled in a polypropylene-polyethyylene-polypropylene (3 layer structure) micro porous film having a refractive index of 1.50 and a thickness of 25 µm in which a micro pores observed by an electron microscope on the surface of the film was substantially in the form of ellipse, the average aspect ratio of the ellipse form was 5.6, the average minor axis size of micro pores was 0.18 µm, the average major axis size was 1.0 µm, and directions along the major axis direction are substantially oriented to one direction, and gas permeability is 551sec/100 cc·cm².

Provided that the transmittance in the case of no anisotropic scattering film (blank) is taken for 100%, the progressive light transmittance of the above-mentioned film were 77.8% in transmission state and 19.7% in scattering state. The total light transmittance of the above-mentioned film obtained in the same manner, were 89.8% in a transmission state, and 68.2% in scattering state.

### Example 21

An anisotropic substance (liquid crystal mixture A consisting Compounds 3-1, 3-2, 3-3 and 3-4 represented by the general formula (2) in a ratio shown in Table 1, refractive index no=1.51, ne=1.91), was filled in a polypropylene micro porous film having a refractive index of 1.50 and a thickness of 25 µm in which a micro pores observed by an electron microscope on the surface of the film was substantially in the form of ellipse, the average aspect ratio of the ellipse form was 16.7, the average minor axis size of micro pores was 0.12 µm, the average major axis size was 2.0 µm, and directions along the major axis direction are substantially oriented to one direction, and gas permeability is 700sec/100 cc·cm².

**Table 1**

| | | % by weight |
|---|---|---|
| Compound 3-1 | 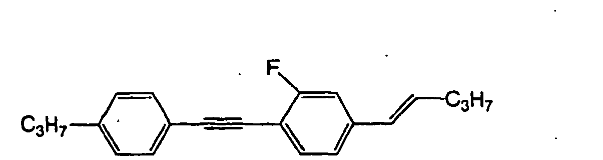 | 46.2 |
| Compound 3-2 | 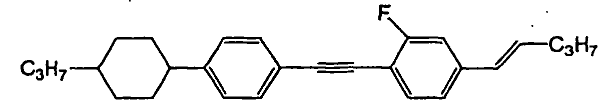 | 31.8 |
| Compound 3-3 | 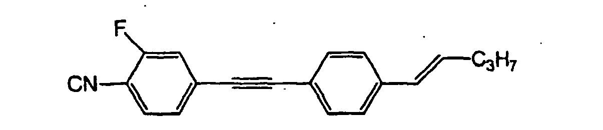 | 13.7 |
| Compound 3-4 | 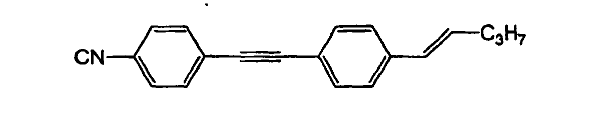 | 8.3 |

Provided that the transmittance in the case of no anisotropic scattering film (blank) is taken for 100%, the progressive light transmittance of the above-mentioned film were 68.2% in transmission state and 9.7% in scattering state. The total light transmittance of the above-mentioned film obtained in the same manner, were 88.2% in a transmission state, and 58.9% in scattering state.

### Example 22

An anisotropic substance (liquid crystal mixture A consisting Compounds 3-1, 3-2, 3-3 and 3-4 represented by the general formula (2) in a ratio shown in Table 1, refractive index no=1.51, ne=1.91), was filled in a polypropylene micro porous film having a refractive index of 1.50 and a thickness of 25 µm in which a micro pores observed by an electron microscope on the surface of the film was substantially in the form of ellipse, the average aspect ratio of the ellipse form was 22.2, the average minor axis size of micro pores was 0.09 µm, the average major axis size was 2.0 µm, and directions along the major axis direction are substantially oriented to one direction, and gas permeability is 628sec/100 cc·cm².

Provided that the transmittance in the case of no anisotropic scattering film (blank) is taken for 100%, the progressive light transmittance of the above-mentioned film were 73.4% in transmission state and 7.3% in scattering state. The total light transmittance of the above-mentioned film obtained in the same manner, were 90.6% in a transmission state, and 61.6% in scattering state.

### Example 23

An anisotropic substance (liquid crystal mixture E9, produced by Merck & Co., refractive index no=1.52, ne=1.78), was filled in a separator film for lithium secondary battery (H6022, produced by Asahi Chemical Industry) having a refractive index of about 1.50 and a thickness of 27 *µ*m in which a micro pores observed by an electron microscope on the surface of the film was substantially in the form of ellipse, the average aspect ratio of the ellipse form was 2, the average minor axis size of micro pores was 0.2 *µ*m, the average major axis size was 0.5 µm, and directions along the major axis direction are substantially oriented to one direction, and gas permeability is 82 sec/100 cc·cm².

Provided that the transmittance in the case of no anisotropic scattering film (blank) is taken for 100%, the progressive light transmittance of the above-mentioned film were 0.6% in transmission state and 0.5% in scattering state. The total light transmittance of the above-mentioned film obtained in the same manner, were 56.0% in a transmission state, and 50.5% in scattering state.

### Example 24

The micro porous film of Example 11 was uniaxially drawn at 120°C in a drawing ratio of 2 to produce a film in which micro pores observed by an electron microscope on the surface of the film were substantially in the form of ellipse, the average aspect ratio of the ellipse form was 4, the average minor axis size of micro pores was 0.2 µm, the average major axis size was 1.0 µm, and directions along the major axis direction are substantially oriented to one direction, and gas permeability is 694 sec/100 cc-cm². In the above micro porous film, an anisotropic substance (liquid crystal mixture E9, produced by Merck & Co., refractive index no=1.52, ne=1.78), was filled.

Provided that the transmittance in the case of no anisotropic scattering film (blank) is taken for 100%, the progressive light transmittance of the above-mentioned film were 61.6% in transmission state and 6.4% in scattering state. The total light transmittance of the above-mentioned film obtained in the same manner, were 91.1% in a transmission state, and 53.6% in scattering state.

### Example 25

A separator film for lithium secondary battery (SETELA, produced by Tohnen Chemical Co.; refractive index of about 1.50, thickness of 26 µm, gas permeability is 725 sec/100 cc·cm²) was uniaxially drawn at 100°C in a drawing ratio of 1.9 to produce a micro porous film. Micro pores on the surface of the film observed by an electron microscope were substantially in the form of ellipse, and the average aspect ratio of the ellipse form was 2, the average minor axis size of micro pores was 0.1 µm which is shorter than the wavelength of light, the average major axis size was 0.4 µm which is longer than the wavelength of light, and directions along the major axis direction were substantially oriented to one direction. In this film, an anisotropic substance (liquid crystal mixture E9, produced by Merck & Co., refractive index no=1.52, ne=1.78) was filled.

Provided that the transmittance in the case of no anisotropic scattering film (blank) is taken for 100%, the progressive light transmittance of the above-mentioned film were 59.5% in transmission state and 24.5% in scattering state. The total light transmittance of the above-mentioned film obtained in the same manner, were 91.0% in a transmission state, and 75.0% in scattering state.

As shown in the above Examples, films having higher dependency on polarized light (scattering anisotropy) as compared with Comparative Example 1 were obtained.

When the above-mentioned films are used for the constitution shown in Fig. 3 or 4, liquid crystal displays having improved luminance are obtained.

According to the present invention, an anisotropic scattering film which is produced by a easy method and has high scattering anisotropy can be obtained, and by using this anisotropic scattering film, a liquid crystal display having improved luminance can be provided.

## Claims

1. An anisotropic scattering film comprising a micro-porous film (1) and a substance in micro pores (2) of said micro-porous film, wherein the void fraction occupied by micro pores in the micro-porous film is from 30 to 85%, the micro pores observed on the surface of the film are substantially in the form of an ellipse, the ratio of the major axis (4) to the minor axis (3) (major axis/minor axis) of said ellipse is greater than 1, the minor axes of the micro pores are smaller than the wavelength of light, the major axes of the micro pores are oriented in substantially one direction, the refractive index of the substance in micro pores of the micro-porous film differs from the refractive index of the micro-porous film, the anisotropic scattering film has scattering anisotropy to a polarization component of polarized light, and the micro pores are substantially connected mutually through curved paths from the surface to the other surface of the film.

2. A film according to claim 1, wherein the micro pores of the micro-porous film are filled with a substance having a refractive index different from the refractive index of the micro-porous film.

3. A film according to claim 1 or 2, wherein the micro-porous film is composed of a polymer.

4. A film according to any one of claims 1 to 3, wherein the gas permeability of the micro-porous film is 5 to 5,000 sec/100cc cm².

5. A film according to any one of claims 1 to 4, wherein the ratio of the major axis to the minor axis (major axis/minor axis) is 3 to 30.

6. A film according to any one of claims 1 to 5, obtainable by polymerizing a polymerizable substance filled in the micro pores.

7. A film according to any one of claims 1 to 6, wherein the substance in the micro pores is an anisotropic substance.

8. A film according to claim 7, wherein the anisotropic substance is oriented in substantially one direction.

9. A film according to claim 7 or 8, which satisfies the formulae:
0.01 < |n-ne| < 0.6
0 ≤ |n-no| < 0.05
wherein n is the refractive index of the micro-porous film, ne and no are the refractive indices of the anisotropic substance, and ne > no.

10. A film according to any one of claims 7 to 9, wherein the anisotropic substance is a liquid crystal.

11. A film according to claim 10, wherein the liquid crystal comprises at least one compound selected from the compounds of formulae (1) to (3): 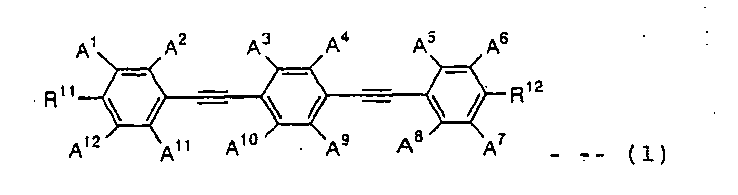 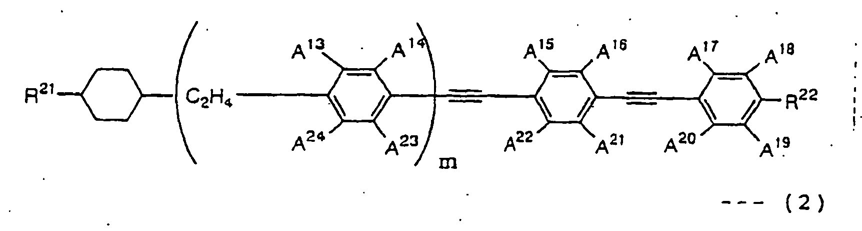 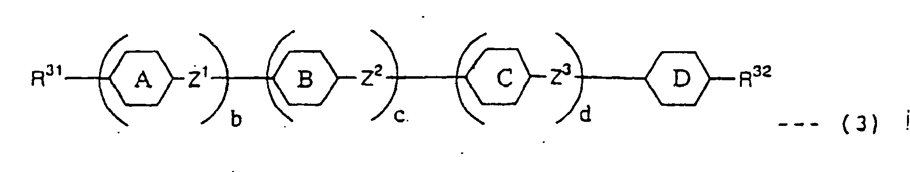 wherein, in formula (1), A¹-A¹² represent, each independently, a hydrogen atom, a fluorine atom, or an alkyl group or alkoxy group having 1-10 carbon atoms which may be substituted with fluorine; R¹¹ and R¹² represent, each independently, a hydrogen atom, a fluorine atom, a cyano group, SF₅, NCS, 4-R¹³-(cycloalkyl) group, 4-R¹³-(cycloalkenyl group) or R¹⁴-(O)_{q}¹¹; R¹³ represents a hydrogen atom, a linear or branched alkyl group having 1-12 carbon atoms which may be substituted with fluorine; R¹⁴ represents a linear or branched alkyl group having 1-12 carbon atoms which may be substituted with fluorine; and q¹¹ represents 0 or 1;
in formula (2), A¹³-A²⁴ represent, each independently, a hydrogen atom, a fluorine atom, or an alkyl group having 1-10 carbon atoms; m is 0 or 1; R²¹ represents a hydrogen atom, or a linear or branched alkyl group having 1-12 carbon atoms which may be substituted with fluorine; R²² represents a hydrogen atom, a fluorine atom, a cyano group, 4-R²³-(cycloalkyl) group, 4-R²³-(cycloalkenyl group) or R²⁴-(O)_{q}²¹; R²³ represents a hydrogen atom, or a linear or branched alkyl group having 1-12 carbon atoms which may be substituted with fluorine; R²⁴ represents a linear or branched alkyl group having 1-12 carbon atoms which may be substituted with fluorine; and q²¹ represents 0 or 1; and
in formula (3), ring A, ring B, ring C and ring D, each independently, represents 1,4-phenylene, 1,4-cyclohexylene, 1,4-cyclohexenylene, 4,1-cyclohexenylene, 2,5-cyclohexenylene, 5,2-cyclohexenylene, 3,6-cyclohexenylene, 6,3-cyclohexenylene, 2,5-pyrimidinediyl, 5,2-pyrimidinediyl, 2,5-pyridinediyl, 5,2-pyridinediyl, 2,5-dioxanediyl or 5,2-dioxanediyl; hydrogen atoms on a ring A, ring B, ring C, and ring D may be replaced by fluorine; R³¹ and R³² represent a hydrogen atom, a fluorine atom, fluoromethyl group, difluoromethyl group, trifluoromethyl group, fluoromethoxy group, difluoromethoxy group, trifluoromethoxy group, cyano group, an alkyl group having 1-12 carbon atoms, an alkenyl group having 2-12 carbon atoms, an alkynyl group having 2-12 carbon atoms, an alkoxy group having 1-12 carbon atoms, an alkenyloxy group having 2-12 carbon atoms, an alkynyloxy group having 2-12 carbon atoms, an alkoxyalkyl group having 2-16 carbon atoms, or an alkoxyalkenyl group having 3-16 carbon atoms; the methylene group in these alkyl groups, alkenyl groups and alkynyl groups may be replaced by oxygen atom, sulfur atom, or silicon atom, and the alkyl groups, alkenyl groups and alkynyl groups can be either linear or branched; Z¹, Z², and Z³ represent, each independently, -COO-, -OCO-, -OCH₂-, -CH₂O-, an alkylene group having 1-5 carbon atoms, an alkenylene group having 2-5 carbon atoms, an alkynylene group having 2-5 carbon atoms, or a single bond; and b, c and d are 0 or 1 each independently, and satisfy b÷c÷d ≥1.

12. A liquid crystal display comprising a liquid crystal panel 7 with a front surface side and a back surface side, a polarizing plate (6) at least on the front surface side of the liquid crystal panel and an anisotropic scattering film as described in any one of claims 1 to 11, a light guide (8), and a reflection plate (9) or a diffuse reflection plate piled in this order on the back surface side of the liquid crystal panel, wherein the transmission axis of the liquid crystal panel and the transmission axis of the anisotropic scattering film are approximately parallel.

13. A display according to claim 12 wherein the liquid crystal panel has a polarizing plate on the front surface side and the back surface side.

14. A display according to claim 13 wherein the transmission axis of the polarizing plate on the back surface side of the liquid crystal panel and the transmission axis of the anisotropic scattering film are approximately parallel.

15. A display according to any one of claims 12 to 14 wherein a retardation plate is located between the anisotropic scattering film and the reflection plate or diffuse reflection plate.

## Patentansprüche

1. Anisotrope Streuungsfolie, umfassend eine mikroporöse Folie (1) und einen Stoff in Mikroporen (2) der mikroporösen Folie, wobei der Anteil an Leerstellen, der durch Mikroporen in der mikroporösen Folie besetzt ist, 30 bis 85 % beträgt, die Mikroporen, die auf der Oberfläche der Folie beobachtet werden, im Wesentlichen in der Form einer Ellipse vorliegen, das Verhältnis der Hauptachse (4) zu der Nebenachse (3) (Hauptachse/Nebenachse) der Ellipse größer als 1 ist, die Nebenachsen der Mikroporen kleiner als die Wellenlänge von Licht sind, die Hauptachsen der Mikroporen im Wesentlichen in einer Richtung orientiert sind, der Brechungsindex des Stoffes in Mikroporen der mikroporösen Folie sich von dem Brechungsindex der mikroporösen Folie unterscheidet, die anisotrope Streuungsfolie Streuungsanisotropie in Bezug auf eine Polarisationskomponente von polarisiertem Licht aufweist, und die Mikroporen im Wesentlichen miteinander durch gekrümmte Bahnen von der Oberfläche zu der anderen Oberfläche der Folie verbunden sind.

2. Folie nach Anspruch 1, wobei die Mikroporen der mikroporösen Folie mit einem Stoff gefüllt sind, der einen anderen Brechungsindex als den Brechungsindex der mikroporösen Folie aufweist.

3. Folie nach Anspruch 1 oder 2, wobei die mikroporöse Folie aus einem Polymer zusammengesetzt ist.

4. Folie nach einem der Ansprüche 1 bis 3, wobei die Gasdurchlässigkeit der mikroporösen Folie 5 bis 5000 sek/100cc. cm² beträgt.

5. Folie nach einem der Ansprüche 1 bis 4, wobei das Verhältnis der Hauptachse zu der Nebenachse (Hauptachse/Nebenachse) 3 bis 30 beträgt.

6. Folie nach einem der Ansprüche 1 bis 5, erhältlich durch Polymerisieren eines polymerisierbaren Stoffes, der in die Mikroporen gefüllt ist.

7. Folie nach einem der Ansprüche 1 bis 6, wobei der Stoff in den Mikroporen ein anisotroper Stoff ist.

8. Folie nach Anspruch 7, wobei der anisotrope Stoff im Wesentlichen in einer Richtung orientiert ist.

9. Folie nach Anspruch 7 oder 8, die die Formeln:
0,01 < | n-ne | < 0,6
0 ≤ | n-no | < 0,05
erfüllt, wobei n der Brechungsindex der mikroporösen Folie ist, ne und no die Brechungsindices des anisotropen Stoffes sind, und ne > no.

10. Folie nach einem der Ansprüche 7 bis 9, wobei der anisotrope Stoff ein Flüssigkristall ist.

11. Folie nach Anspruch 10, wobei der Flüssigkristall mindestens eine Verbindung umfasst, die aus den Verbindungen der Formeln (1) bis (3) ausgewählt ist: 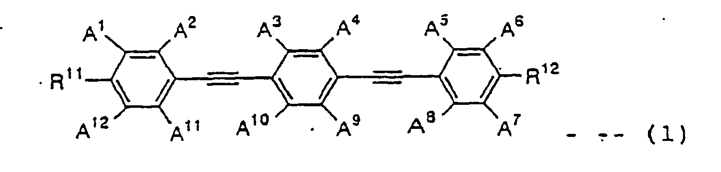 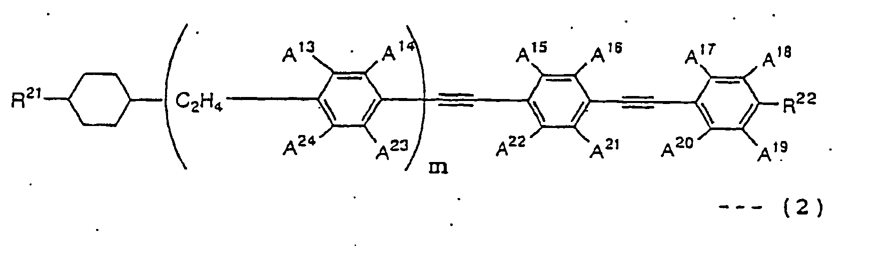 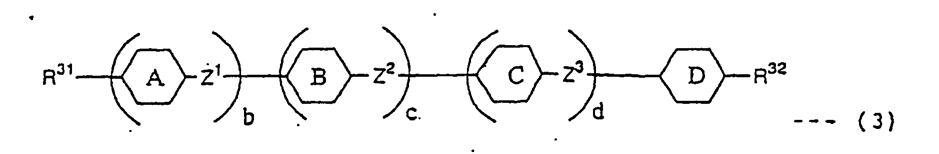 wobei, in Formel (1), A¹ bis A¹² jeweils unabhängig voneinander ein Wasserstoffatom, ein Fluoratom, oder einen Alkylrest oder Alkoxyrest mit 1 bis 10 Kohlenstoffatomen, die mit Fluor substituiert sein können, bedeuten; R¹¹ und R¹² jeweils unabhängig voneinander ein Wasserstoffatom, ein Fluoratom, eine Cyanogruppe, SF₅, NCS, einen 4-R¹³⁻(Cycloalkylrest), einen 4-R¹³-(Cycloalkenylrest) oder R¹⁴-(O)q¹¹ bedeuten; R¹³ ein Wasserstoffatom, oder einen geradkettigen oder verzweigten Alkylrest mit 1 bis 12 Kohlenstoffatomen, der mit Fluor substituiert sein kann, bedeutet; R¹⁴ einen geradkettigen oder verzweigten Alkylrest mit 1 bis 12 Kohlenstoffatomen, der mit Fluor substituiert sein kann, bedeutet; und q¹¹ 0 oder 1 bedeutet;
in Formel (2), A¹³ bis A²⁴ jeweils unabhängig voneinander ein Wasserstoffatom, ein Fluoratom, oder einen Alkyrest mit 1 bis 10 Kohlenstoffatomen bedeuten; m 0 oder 1 ist; R²¹ ein Wasserstoffatom, oder einen geradkettigen oder verzweigten Alkylrest mit 1 bis 12 Kohlenstoffatomen, der mit Fluor substituiert sein kann, bedeutet; R²² ein Wasserstoffatom, ein Fluoratom, eine Cyanogruppe, einen 4-R²³-(Cycloalkylrest), einen 4-R²³-(Cycloalkenylrest) oder R²⁴-(O)_{q}²¹ bedeutet; R²³ ein Wasserstoffatom, oder einen geradkettigen oder verzweigten Alkylrest mit 1 bis 12 Kohlenstoffatomen, der mit Fluor substituiert sein kann, bedeutet; R²⁴ einen geradkettigen oder verzweigten Alkylrest mit 1 bis 12 Kohlenstoffatomen, der mit Fluor substituiert sein kann, bedeutet; und q²¹ 0 oder 1 bedeutet; und
in Formel (3), Ring A, Ring B, Ring C und Ring D jeweils unabhängig voneinander 1,4-Phenylen, 1,4-Cyclohexylen, 1,4-Cyclohexenylen, 4,1-Cyclohexenylen, 2,5-Cyclohexenylen, 5,2-Cyclohexenylen, 3,6-Cyclohexenylen, 6,3-Cyclohexenylen, 2,5-Pyrimidindiyl, 5,2-Pyrimidindiyl, 2,5-Pyridindiyl, 5,2-Pyridindiyl, 2,5-Dioxandiyl oder 5,2-Dioxandiyl bedeuten; Wasserstoffatome an einem Ring A, Ring B, Ring C und Ring D durch Fluor ersetzt sein können; R³¹ und R³² ein Wasserstoffatom, ein Fluoratom, einen Fluormethylrest, einen Difluormethylrest, einen Trifluormethylrest, einen Fluormethoxyrest, einen Difluormethoxyrest, einen Trifluormethoxyrest, eine Cyanogruppe, einen Alkylrest mit 1 bis 12 Kohlenstoffatomen, einen Alkenylrest mit 2 bis 12 Kohlenstoffatomen, einen Alkinylrest mit 2 bis 12 Kohlenstoffatomen, einen Alkoxyrest mit 1 bis 12 Kohlenstoffatomen, einen Alkenyloxyrest mit 2 bis 12 Kohlenstoffatomen, einen Alkinyloxyrest mit 2 bis 12 Kohlenstoffatomen, einen Alkoxyalkylrest mit 2 bis 16 Kohlenstoffatomen oder einen Alkoxyalkenylrest mit 3 bis 16 Kohlenstoffatomen bedeuten; die Methylengruppe in diesen Alkylresten, Alkenylresten und Alkinylresten durch ein Sauerstoffatom, Schwefelatom oder Siliciumatom ersetzt sein kann, und die Alkylreste, Alkenylreste und Alkinylreste entweder geradkettig oder verzweigt sein können; Z¹, Z² und Z³ jeweils unabhängig voneinander -COO-, -OCO-, -OCH₂-, -CH₂O-, einen Alkylenrest mit 1 bis 5 Kohlenstoffatomen, einen Alkenylenrest mit 2 bis 5 Kohlenstoffatomen, einen Alkinylenrest mit 2 bis 5 Kohlenstoffatomen oder eine Einfachbindung bedeuten; und b, c und d jeweils unabhängig voneinander 0 oder 1 sind und b+c+d ≥ 1 erfüllen.

12. Flüssigkristallanzeigevorrichtung, umfassend ein Flüssigkristallfeld (7) mit einer vorderen Oberflächenseite und einer hinteren Oberflächenseite, eine Polarisationsplatte (6) mindestens auf der vorderen Oberflächenseite des Flüssigkristallfelds, und eine anisotrope Streuungsfolie nach einem der Ansprüche 1 bis 11, eine Lichtführung (8), und eine Reflexionsplatte (9) oder eine diffuse Reflexionsplatte, die in dieser Reihenfolge auf der hinteren Oberflächenseite des Flüssigkristallfelds aufeinander angeordnet sind, wobei die Transmissionsachse des Flüssigkristallfelds und die Transmissionsachse der anisotropen Streuungsfolie etwa parallel sind.

13. Anzeigevorrichtung nach Anspruch 12, wobei das Flüssigkristallfeld eine Polarisationsplatte auf der vorderen Oberflächenseite und der hinteren Oberflächenseite aufweist.

14. Anzeigevorrichtung nach Anspruch 13, wobei die Transmissionsachse der Polarisationsplatte auf der hinteren Oberflächenseite des Flüssigkristallfelds und die Transmissionsachse der anisotropen Streuungsfolie etwa parallel sind.

15. Anzeigevorrichtung nach einem der Ansprüche 12 bis 14, wobei eine Verzögerungsplatte zwischen der anisotropen Streuungsfolie und der Reflexionsplatte oder diffusen Reflexionsplatte angeordnet ist.

## Revendications

1. Film à diffusion anisotrope comprenant un film microporeux (1) et une substance dans les micropores (2) dudit film microporeux, dans lequel la fraction de vides occupée par les micropores dans le film microporeux est de 30 à 85 %, les micropores observés à la surface du film sont sensiblement sous la forme d'une ellipse, le rapport de l'axe principal (4) à l'axe secondaire (3) (axe principal/axe secondaire) de ladite ellipse est supérieur à 1, les axes secondaires des micropores sont inférieurs à la longueur d'onde de la lumière, les axes principaux des micropores sont orientés selon sensiblement une direction, l'indice de réfraction de la substance dans les micropores du film microporeux diffère de l'indice de réfraction du film microporeux, le film à diffusion anisotrope présente une diffusion anisotrope à un composant de polarisation de la lumière polarisée, et les micropores sont sensiblement reliés mutuellement via des trajets courbes depuis la surface vers l'autre surface du film.

2. Film selon la revendication 1, dans lequel les micropores du film microporeux sont remplis par une substance ayant un indice de réfraction différent de l'indice de réfraction du film microporeux.

3. Film selon la revendication 1 ou 2, dans lequel le film microporeux est composé d'un polymère.

4. Film selon l'une quelconque des revendications 1 à 3, dans lequel la perméabilité aux gaz du film microporeux est 5 à 5000 s/100 cm³.cm².

5. Film selon l'une quelconque des revendications 1 à 4, dans lequel le rapport de l'axe principal à l'axe secondaire (axe principal/axe secondaire) est 3 à 30.

6. Film selon l'une quelconque des revendications 1 à 5, susceptible d'être obtenu par polymérisation d'une substance polymérisable remplissant les micropores.

7. Film selon l'une quelconque des revendications 1 à 6, dans lequel la substance dans les micropores et une substance anisotrope.

8. Film selon la revendication 7, dans lequel la substance anisotrope est orientée sensiblement dans une direction.

9. Film selon la revendication 7 ou 8, qui répond aux formules :
0,01 < | n-ne |< 0,6
0 ≤ | n-no |< 0,05
dans lesquelles n est l'indice de réfraction du film microporeux, ne et no sont les indices de réfraction de la substance anisotrope, et ne > no.

10. Film selon l'une quelconque des revendications 7 à 9, dans lequel la substance anisotrope est un cristal liquide.

11. Film selon la revendication 10, dans lequel le cristal liquide comprend au moins un composé choisi parmi les composés des formules (1) à (3) : 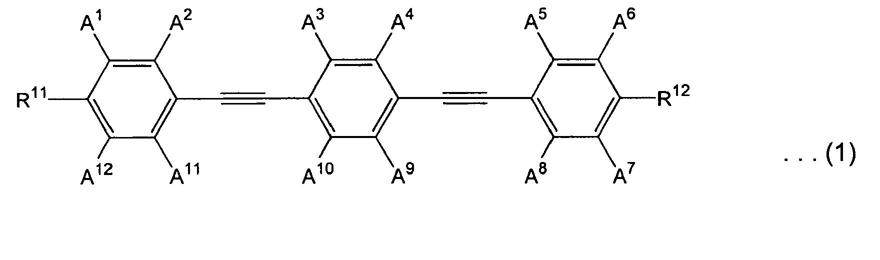 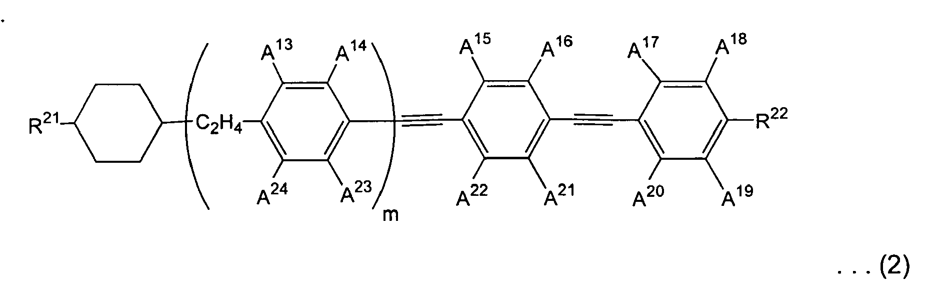 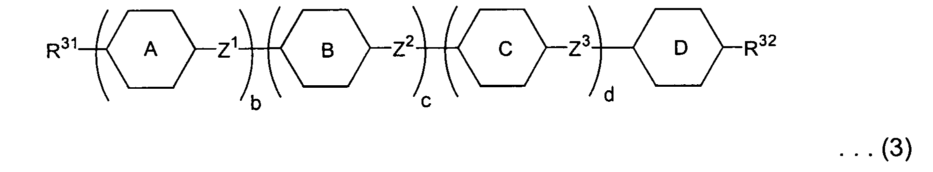 dans lequel, dans la formule (1), A¹ à A¹² représentent, chacun indépendamment, un atome d'hydrogène, un atome de fluor, ou un groupe alkyle ou un groupe alcoxy ayant 1 à 10 atomes de carbone qui peut être substitué par le fluor, R¹¹ et R¹² représentent, chacun indépendamment, un atome d'hydrogène, un atome de fluor, un groupe cyano, SF₅, NCS, un groupe 4-R¹³-(cycloalkyle), un groupe 4-R¹³-(cycloalcényle) ou R¹⁴-(O)q¹¹ ; R¹³ représente un atome d'hydrogène, un groupe alkyle linéaire ou ramifié ayant 1 à 12 atomes de carbone qui peut être substitué par le fluor ; R¹⁴ représente un groupe alkyle linéaire ou ramifié ayant 1 à 12 atomes de carbone qui peut être substitué par le fluor ; et q¹¹ représente 0 ou 1 ;
dans la formule (2), A¹³ à A²⁴ représentent, chacun indépendamment, un atome d'hydrogène, un atome de fluor, ou un groupe alkyle ayant 1 à 10 atomes de carbone ; m est 0 ou 1 ; R²¹ représente un atome d'hydrogène, ou un groupe alkyle linéaire ou ramifié ayant 1 à 12 atomes de carbone qui peut être substitué par le fluor ; R²² représente un atome d'hydrogène, un atome de fluor, un groupe cyano, un groupe 4-R²³-(cycloalkyle), un groupe 4-R²³-(cycloalcényle) ou R²⁴-(O)q²¹; R²³ représente un atome d'hydrogène, ou un groupe alkyle linéaire ou ramifié ayant 1 à 12 atomes de carbone qui peut être substitué par le fluor ; R²⁴ représente un groupe alkyle linéaire ou ramifié ayant 1 à 12 atomes de carbone qui peut être substitué par le fluor ; et q²¹ représente 0 ou 1 ; et
dans la formule (3), le cycle A, le cycle B, le cycle C et le cycle D représentent, chacun indépendamment, un groupe 1,4-phénylène, 1,4-cyclohexylène, 1,4-cyclohexénylène, 4,1-cyclohexénylène, 2,5-cyclohexénylène, 5,2-cyclohexénylène, 3,6-cyclohexénylène, 6,3-cyclohexénylène, 2,5-pyrimidinediyle, 5,2-pyrimidinediyle, 2,5-pyridinediyle, 5,2-pyridinediyle, 2,5-dioxanediyle ou 5,2-dioxanediyle ; des atomes d'hydrogène sur le cycle A, le cycle B, le cycle C, et le cycle D peuvent être remplacés par le fluor ; R³¹ et R³² représentent un atome d'hydrogène, un atome de fluor, le groupe fluorométhyle, le groupe difluorométhyle, le groupe trifluorométhyle, le groupe fluorométhoxy, le groupe difluorométhoxy, le groupe trifluorométhoxy, le groupe cyano, un groupe alkyle ayant 1 à 12 atomes de carbone, un groupe alcényle ayant 2 à 12 atomes de carbone, un groupe alcynyle ayant 2 à 12 atomes de carbone, un groupe alcoxy ayant 1 à 12 atomes de carbone, un groupe alcényloxy ayant 2 à 12 atomes de carbone, un groupe alcényloxy ayant 2 à 12 atomes de carbone, un groupe alcoxyalkyle ayant 2 à 16 atomes de carbone, ou un groupe alcoxyalcényle ayant 3 à 16 atomes de carbone ; le groupe méthylène dans ces groupes alkyle, dans ces groupes alcényle et dans ces groupes alcynyle peut être remplacé par un atome d'oxygène, un atome de soufre, ou un atome de silicium, et les groupes alkyle, les groupes alcényle et les groupes alcynyle peuvent être linéaires ou ramifiés ; Z¹, Z², et Z³ représentent, chacun indépendamment, -COO-, -OCO-, -OCH₂-, -CH₂O-, un groupe alkylène ayant 1 à 5 atomes de carbone, un groupe alcénylène ayant 2 à 5 atomes de carbone, un groupe alcynylène ayant 2 à 5 atomes de carbone, ou une liaison simple ; et b, c et d sont 0 ou 1 chacun indépendamment, et répondent à b+c+d ≥ 1.

12. Affichage à cristaux liquides comprenant un panneau à cristaux liquides avec un côté de surface avant et un côté de surface arrière, une plaque polarisante (6) au moins sur le côté de surface avant du panneau à cristaux liquides, et un film à diffusion anisotrope tel que décrit dans l'une quelconque des revendications 1 à 11, un guide de lumière (8) et une plaque de réflexion (9) ou une plaque de réflexion diffuse empilés dans cet ordre sur le côté de surface arrière du panneau à cristaux liquides, dans lequel l'axe de transmission du panneau à cristaux liquides et l'axe de transmission du film à diffusion anisotrope sont approximativement parallèles.

13. Affichage selon la revendication 12, dans lequel le panneau à cristaux liquides a une plaque polarisante sur le côté de surface avant et sur le côté de surface arrière.

14. Affichage selon la revendication 13, dans lequel l'axe de transmission de la plaque polarisante sur le côté de surface arrière du panneau à cristaux liquides et l'axe de transmission du film à diffusion anisotrope sont approximativement parallèles.

15. Affichage selon l'une quelconque des revendications 12 à 14, dans lequel une plaque de ralentissement est située entre le film à diffusion anisotrope et la plaque de réflexion ou la plaque de réflexion diffuse.
